# EUROPÄISCHE PATENTSCHRIFT

(11) **EP 4 330 138 B1**
(45) Veröffentlichungstag und Bekanntmachung des Hinweises auf die Patenterteilung: **29.10.2025**
(21) Anmeldenummer: 22726616.0
(22) Anmeldetag: 28.04.2022
(51) Int. Cl.: B64D 11/06

(54) **FLUGZEUGSITZMODUL**
AIRCRAFT SEAT MODULE
MODULE DE SIÈGE D'AÉRONEF

(30) Priorität: 28.04.2021 DE 102021110957
(43) Veröffentlichungstag der Anmeldung: 06.03.2024
(73) Patentinhaber: Recaro Aircraft Seating GmbH & Co. KG, 74523 Schwäbisch Hall (DE)
(72) Erfinder: UDRISTE, Daniel, 74523 Schwaebisch Hall (DE); THIELE, Maik, 70565 Stuttgart (DE); DRENZECK, Thomas, 74545 Michelfeld (DE); HOFFMANN, Hermann, 74523 Schwäbisch Hall (DE)
(74) Vertreter: Daub, Thomas
(86) Internationale Anmeldenummer: PCT/EP2022/061418
(87) Internationale Veröffentlichungsnummer: WO 2022/229356

(56) Entgegenhaltungen:
- DE-A1- 102019 108 490
- US-A1- 2010 065 683
- US-A1- 2019 092 475
- US-A1- 2019 248 497
- US-A1- 2019 276 151
- US-B2- 9 403 597

## Beschreibung

### Stand der Technik

Die Erfindung betrifft ein Flugzeugsitzmodul nach dem Oberbegriff des Patentanspruchs 1.

Es ist ein Flugzeugsitzmodul, das einen Flugzeugsitzbereich ausbildet, mit einem Flugzeugsitz, der dazu vorgesehen ist, in einem Winkel α von 30 bis 80 Grad, vorzugsweise 45 bis 65 Grad in der Flugzeugkabine montiert zu werden, und der zumindest ein Grundgestell und eine Kinematikeinheit aufweist, mit einer Umhausungseinheit, die ein erstes Umhausungselement, das den Flugzeugsitzbereich im Bereich des Flugzeugsitzes zumindest teilweise begrenzt, und ein zweites Umhausungselement, das den Flugzeugsitzbereich zumindest in einem Bereich vor dem Flugzeugsitz teilweise begrenzt, umfasst, mit einer Ottomane, die einen Fußablagebereich bereitstellt, und mit einer Konsoleneinheit, die zumindest einen Stau- und/oder Ablagebereich des Flugzeugsitzbereichs ausbildet, bereits vorgeschlagen worden.

US 2019/248497 A1 offenbart eine Passagiersitzanordnung zur Verwendung in einer Flugzeugkabine, die eine Sitzeinheit umfasst, welche zwischen einer Sitzkonfiguration und einer Liegekonfiguration umwandelbar ist, wobei jedes Paar von Sitzeinheiten eine nach innen gerichtete Sitzeinheit umfasst.

US 2019/276151 A1 offenbart eine Passagiersitzanordnung für eine Flugzeugkabine, wobei fußseitige Gehäuse mit einziehbaren Armlehnen versehen sind.

US 2010/065683 A1 offenbart einen Flugzeugsitz, der in ein annähernd flaches Bett umwandelbar ist.

DE 10 2019 108490 A1 offenbart eine Flugzeugsitzeinrichtung, die einen mit einem Flugzeugsitz versehenen Sitzbereich umfasst, wobei ein Beleuchtungsmodul mehrere Lichtelemente aufweist, die im Betriebszustand dazu dienen, den Sitzbereich teilweise zu beleuchten.

US 2019/092475 A1 offenbart ein Sitzpaar, insbesondere Sitzanordnungen für Flugzeuge, das einen ersten Sitz und einen zweiten Sitz umfasst, wobei der erste und zweite Sitz jeweils eine erste und zweite Schale aufweisen, mit einem ersten und zweiten Paneel, die sich jeweils zum zweiten bzw. ersten Sitz hin erstrecken.

US 9 403 597 B2 offenbart eine Passagierunterbringungseinheit für ein Fahrzeug, wobei die Unterbringungseinheit so ausgestaltet ist, dass sie individuelle, in sich geschlossene Sitz- und Schlafmöglichkeiten für einen Passagier bietet.

Die Aufgabe der Erfindung besteht insbesondere darin, eine gattungsgemäße Vorrichtung mit verbesserten Eigenschaften hinsichtlich einer einfachen Zulassung und eines geringen Gewichts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Flugzeugsitzmodul, das einen Flugzeugsitzbereich ausbildet, mit einem Flugzeugsitz, der dazu vorgesehen ist, in einem Winkel α von 30 bis 80 Grad, vorzugsweise 45 bis 65 Grad in der Flugzeugkabine montiert zu werden, und der zumindest ein Grundgestell und eine Kinematikeinheit aufweist, mit einer Umhausungseinheit, die ein erstes Umhausungselement, das den Flugzeugsitzbereich im Bereich des Flugzeugsitzes zumindest teilweise begrenzt, und ein zweites Umhausungselement, das den Flugzeugsitzbereich zumindest in einem Bereich vor dem Flugzeugsitz teilweise begrenzt, umfasst, mit einer Ottomane, die einen Fußablagebereich bereitstellt, und mit einer Konsoleneinheit, die zumindest einen Stau- und/oder Ablagebereich des Flugzeugsitzbereichs ausbildet.

Es wird vorgeschlagen, dass der Flugzeugsitz in einem separat ausgebildeten 16G-Modul und das zweite Umhausungselement, der Ottomane und die Konsoleneinheit in einem separat ausgebildeten 9G-Modul zusammengefasst sind, wobei das 16G-Modul und das 9G-Modul dazu vorgesehen sind, getrennt voneinander an einem Kabinenboden befestigt zu werden. Unter einem "Flugzeugsitzmodul" soll ein Modul verstanden werden, das zumindest einen Flugzeugsitz und weitere Bauteile des Flugzeugsitzbereichs umfasst. Das Flugzeugsitzmodul ist dazu vorgesehen, über ein entsprechendes Befestigungsmittel fest auf dem Kabinenboden montiert zu werden. Das Flugzeugsitzmodul ist als ein Modul ausgebildet, das einen Flugzeugsitzbereich definiert und dazu wenigstens einen Teil der Umhausungseinheit, die den Flugzeugsitzbereich zumindest teilweise von einem restlichen Kabinenbereich abtrennt, zumindest einen in dem Flugzeugsitzbereich angeordneten Flugzeugsitz und weitere Elemente des Flugzeugsitzbereichs umfasst, wie insbesondere eine Konsole, eine Ottomane, eine Tischeinheit, eine Verstaueinheit, und/oder eine Bildschirmeinheit. Das Flugzeugsitzmodul ist vorzugsweise Teil einer Flugzeugsitzanordnung. Unter einer "Flugzeugsitzanordnung" soll eine Anordnung mehrerer Flugzeugsitzmodule verstanden werden, die in zumindest einer Reihe auf einer Aufständerebene, insbesondere auf einem Kabinenboden einer Flugzeugkabine aufgeständert sind. Die Flugzeugsitzanordnung weist mehrere hintereinander angeordnete Flugzeugsitzmodule auf. Die Flugzeugsitzanordnung ist zur Verwendung in einer Flugzeugkabine eines Flugzeugs vorgesehen. Die Flugzeugkabine weist eine Flugzeugkabinenmittelachse auf. Die Flugzeugkabinenmittelachse weist jeweils einen selben Abstand zu sich gegenüberliegenden Bordwänden der Flugzeugkabine auf. Die Flugzeugkabinenmittelachse ist parallel zu einer Rollachse des Flugzeugs ausgerichtet. Vorzugsweise ist die Flugzeugkabinenmittelachse parallel zu einer Aufständerebene der Flugzeugkabine ausgerichtet. Vorzugsweise weist die Flugzeugkabine einen Flugzeugkabinenboden auf, der die Aufständerebene ausbildet. Die Flugzeugsitzmodule der Flugzeugsitzanordnung sind dazu vorgesehen, auf dem Kabinenboden der Flugzeugkabine aufgeständert zu werden. Die Flugzeugkabine weist vorzugsweise genau einen Mittelgang auf. Unter einem "Mittelgang" soll ein Gang zwischen zwei Reihen an Flugzeugsitzmodulen verstanden werden, über den die Flugzeugsitzmodule der Flugzugsitzanordnung zugänglich sind. Vorzugsweise ist genau ein Mittelgang vorgesehen. Dir Flugzeugsitzanordnung ist vorzugsweise für eine Flugzeugkabine mit genau einem Mittelgang vorgesehen. Bevorzugt erstreckt sich der zumindest eine Mittelgang zumindest im Wesentlichen parallel zu der Flugzeugkabinenmittelachse. Unter einem "Flugzeugsitzbereich" soll dabei vorzugsweise ein Bereich verstanden werden, den ein Passagier in der Flugzeugkabine persönlich zur Verfügung hat, vorzugsweise während der Passagier das Flugzeugsitzmodul nutzt, wobei vorzugsweise alle Teile des einen Flugzeugsitzmoduls in dem Flugzeugsitzbereich angeordnet sind. Der Flugzeugsitz des Flugzeugsitzmoduls ist dazu vorgesehen, einen Sitzplatz für einen Passagier in dem Flugzeug bereitzustellen. Der Flugzeugsitz umfasst zumindest einen Sitzboden und eine Rückenlehne. Vorzugsweise umfasst der Flugzeugsitz zumindest eine Armlehne. Zusätzlich wäre denkbar, dass der Flugzeugsitz eine Beinstütze umfasst. Grundsätzlich kann der Flugzeugsitz weitere Anbauteile, wie vorzugsweise eine Kopfstütze, umfassen. Bevorzugt umfasst der Flugzeugsitz eine Dreipunktgurteinheit, über die ein Passagier auf dem Flugzeugsitz gesichert werden kann. Unter einer "Dreipunktgurteinheit" soll dabei insbesondere eine Rückhalteeinheit verstanden werden, mittels der ein Passagier zumindest in einem geschlossenen Zustand auf dem Sitz gehalten wird, wobei die Rückhalteeinheit dazu insbesondere wenigstens ein Gurtband aufweist, das vorzugsweise von einem Gewebeband gebildet ist und in dem geschlossenen Zustand an wenigstens drei Anbindungspunkten fest mit dem Flugzeugsitz, insbesondere mit einer tragenden Struktur des Flugzeugsitzes, verbunden ist. Dabei sind die drei Anbindungspunkte der Dreipunktgurteinheit in einem geschlossenen Zustand über das wenigstens eine Gurtband alle miteinander verbunden. Die Dreipunktgurteinheit ist dabei vorzugsweise als ein Dreipunktgurt ausgebildet. Dazu ist die Dreipunktgurteinheit an zumindest einer Stelle vorzugsweise stetig und untrennbar mit dem Flugzeugsitz verbunden und an zwei weiteren Stellen zumindest in einem geschlossenen Zustand der Dreipunktgurteinheit mit dem Flugzeugsitz fest verbunden. Die Dreipunktgurteinheit weist vorzugsweise einen Beckengurt auf, der in dem geschlossenen Zustand den Sitzboden überspannt und insbesondere einen Becken- und Hüftbereich des Passagiers sichert. Die Dreipunktgurteinheit weist vorzugsweise einen Schultergurt auf, der in einem geschlossenen Zustand die Rückenlehne überspannt und so einen Torso des Passagiers sichert. Vorzugsweise weist die Dreipunktgurteinheit einen Gurtstraffer auf. Grundsätzlich ist es auch denkbar, dass der Flugzeugsitz einen anderen Gurt, insbesondere einen Multipunktgurt, wie beispielsweise einen Fünfpunktgurt aufweist. Durch die Verwendung einer Dreipunktgurteinheit an dem Flugzeugsitz kann vorteilhaft auf einen Airbag in dem Flugzeugsitzmodul verzichtet werden. Vorzugsweise ist der Flugzeugsitz zwischen einer Sitzstellung und einer Liegestellung, vorzugsweise elektromechanisch, verstellbar. Vorzugsweise ist der Flugzeugsitz als ein Full-Flat-Sitz ausgebildet. Unter einem "Full-Flat-Sitz" soll vorzugsweise ein Flugzeugsitz verstanden werden, der, insbesondere elektromechanisch, von der TTL-Stellung in die Liegestellung überführbar ist und in der Liegestellung eine zumindest im Wesentlichen ebene Liegefläche ausbildet. Vorzugsweise ist die zumindest im Wesentlichen ebene Liegefläche in einem Winkel von 3 Grad zu der Aufständerebene geneigt. Besonders bevorzugt sind zumindest ein Sitzboden des Flugzeugsitzes und eine Rückenlehne des Flugzeugsitzes in der Liegestellung zumindest im Wesentlichen parallel zu der Aufständerebene ausgerichtet, auf der der Flugzeugsitz aufgeständert ist. Der Flugzeugsitz ist dazu vorgesehen, in der Liegestellung die im Wesentlichen ebene Liegefläche bereitzustellen, auf der ein durchschnittlicher Passagier ausgestreckt liegen kann. Unter einer "zumindest im Wesentlichen ebenen Liegefläche" soll eine Liegefläche verstanden werden, die vorzugsweise durchgängig eben ist, es ist grundsätzlich aber auch denkbar, dass zwischen einer Rückenlehnenfläche der Rückenlehne und einer Sitzfläche des Sitzbodens, die in der Liegestellung des Flugzeugsitzes die Liegefläche ausbilden, ein von 180 Grad unterschiedlicher Winkel β eingeschlossen wird. Der Winkel β kann dabei vorzugsweise zwischen 150 Grad und 179 Grad liegen. Vorzugsweise beträgt eine maximale Liegeflächenlänge des Flugzeugsitzes in seiner Liegestellung mindestens 1905 mm (75 Zoll). Bevorzugt beträgt die Liegeflächenlänge zumindest 1981 mm (78 Zoll), besonders bevorzugt 2006 mm (79 Zoll). Durch diese Ausgestaltung kann eine vorteilhaft lange Liegeflächenlänge zur Verfügung gestellt werden. Dadurch kann ein vorteilhaft komfortables Flugzeugsitzmodul erreicht werden. Vorzugsweise ist die maximale Liegeflächenlänge mittels einer 229-mm-Ball-Methode (9-Inch-Ball-Methode) ermittelt, bei der zwei voneinander beabstandete Kugeln mit einem Durchmesser von 229 mm (9 Zoll) für eine Messung der Liegeflächenlänge herangezogen werden. Vorzugsweise entspricht die maximale Liegeflächenlänge einem Abstand von maximal voneinander beabstandeten Punkten der zwei Kugeln in dem Flugzeugsitzbereich. Bevorzugt liegen die zwei Kugeln auf der Liegefläche des Flugzeugsitzes auf. Vorzugsweise verläuft die Liegeachse parallel oder entlang einer Geraden, die die maximal voneinander beabstandeten Punkte der zwei Kugeln miteinander verbindet.

Unter einer "TTL-Stellung" soll vorzugsweise eine aufrechte Stellung des Flugzeugsitzes verstanden werden, die aus Sicherheitsgründen, insbesondere in einer Rollphase, in einer Startphase und in einer Landephase des Flugzeugs, eingenommen werden muss.

Darunter, dass der Flugzeugsitz in einem Winkel α in der Flugzeugkabine montiert ist soll verstanden werden, dass der Flugzeugsitz um den Winkel α zu der Flugzeugkabinenmittelachse verschwenkt in der Flugzeugkabine angebracht ist. Der Winkel α, um den der Flugzeugsitz geschwenkt ist, ist zwischen der Sitzrichtung, also der längs verlaufenden Mittelachse des Flugzeugsitzes und der Flugzeugkabinenmittelachse gemessen. Darunter, dass der Flugzeugsitz um einen Winkel α von zumindest 30 Grad verschwenkt ist soll verstanden werden, dass der Winkel α zumindest 30 Grad beträgt, vorzugsweise in einem Winkelbereich von 35 Grad bis 80 Grad liegt, besonders bevorzugt in einem Winkelbereich von 45 bis 60 Grad. In einer bevorzugten Ausgestaltung beträgt der Winkel α, um den der Flugzeugsitz zu der Flugzeugkabinenmittelachse verschwenkt ist, 55 Grad.

Unter einer "Sitzrichtung eines Flugzeugsitzes" soll eine Richtung verstanden werden, welche parallel zu dem Kabinenboden und zumindest im Wesentlichen senkrecht zu einer von der Rückenlehne gebildeten Rückenlehnenfläche ausgerichtet ist. Die Sitzrichtung ist vorzugsweise parallel zu einer längs verlaufenden Mittelachse des Flugzeugsitzes ausgerichtet. Unter einem "Grundgestell" soll vorzugsweise ein tragender Grundrahmen des Flugzeugsitzes verstanden werden, der zur Verstellung des Flugzeugsitzes zwischen seiner Sitzstellung und seiner Liegestellung bewegliche Bauteile aufweisen kann. Das Grundgestell bildet einen Montagerahmen für Bauteile des Flugzeugsitzes aus. Vorzugsweise ist der Flugzeugsitz über das Grundgestell an dem entsprechenden Modul montiert. Unter einer "Kinematikeinheit" soll eine Einheit verstanden werden, die eine Verstellmechanik mit zumindest einem, vorzugsweise mehreren Aktuatoren aufweist, die zur Verstellung des Flugzeugsitzes zwischen seiner Sitzstellung und seiner Liegestellung vorgesehen ist. Unter einer "Umhausungseinheit" soll vorzugsweise eine aus zumindest einem Element, insbesondere aus zumindest einem Umhausungselement gebildete Einheit verstanden werden, die den Flugzeugsitzbereich permanent von einem Teil der Flugzeugkabine, insbesondere einem vor und/oder hinter dem Flugzeugsitzbereich angeordneten weiteren Flugzeugsitzbereich und/oder dem Mittelgang, zumindest bis auf eine Maximalhöhe, physikalisch abtrennt. Die Umhausungseinheit ist als eine Trenneinheit ausgebildet, die den Flugzeugsitzbereich von dem Mittelgang und zumindest einem weiteren Flugzeugsitzbereich abtrennt. Die Umhausungseinheit kann beispielsweise die zwei Umhausungselemente aufweisen, die jeweils einen Teil des Flugzeugsitzbereichs begrenzen. Die beiden Umhausungselemente sind vorzugsweise zumindest teilweise getrennt voneinander ausgebildet. Die beiden Umhausungselemente können vorzugsweise als eigenständige Elemente ausgebildet sein. Grundsätzlich ist es auch denkbar, dass die beiden Umhausungselemente der Umhausungseinheit zumindest teilweise einstückig miteinander ausgebildet sind, insbesondere wenn sie einen Teil des gleichen Moduls, insbesondere des 9G-Moduls ausbilden. Das Flugzeugsitzmodul bildet einen Durchgangsbereich aus, in dem das Flugzeugsitzmodul frei von der Umhausungseinheit ausgebildet ist, wobei der von dem Flugzeugsitzmodul gebildete Flugzeugsitzbereich durch den Durchgangsbereich zugänglich ist. Unter "zumindest teilweise begrenzen" soll verstanden werden, dass die Umhausungseinheit den Flugzeugsitzbereich zumindest bis zu einer maximalen Höhe der Umhausungseinheit begrenzt und ein Durchgangsbereich freigelassen ist, durch den der Flugzeugsitzbereich erreicht werden kann. Unter einem "Bereich vor dem Flugzeugsitz" soll ein Bereich verstanden werden, der in Sitzrichtung des Flugzeugsitzes in einer Sitzstellung vor dem Flugzeugsitz angeordnet ist.

Unter einer "Ottomane" soll ein Element verstanden werden, das zumindest ein Auflageelement aufweist und damit zumindest dazu vorgesehen ist, einen Fußablagebereich für einen Passagier bereitzustellen. Unter einem "Fußablagebereich" soll ein Bereich verstanden werden, der eine, vorzugsweise gepolsterte, Fläche ausbildet, die dazu vorgesehen ist, dass ein Passagier von dem Flugzeugsitz aus seine Füße darauf ablegen kann. Der Fußablagebereich bildet in der Liegestellung des Flugzeugsitzes zusammen mit dem Flugzeugsitz die im Wesentlichen ebene Liegefläche aus.

Unter einer "Konsoleneinheit" soll vorzugsweise eine Einheit verstanden werden, die zumindest ein Funktionselement, vorzugsweise mehrere Funktionselemente, die zu einer Verwendung durch einen Passagier vorgesehen sind, aufweist. Ein Funktionselement kann als eine Verstaumöglichkeit, als eine Bildschirmeinheit, ein Tablethalter, ein Cupholder, eine Bedieneinheit, eine Steckereinheit oder als eine andere, dem Fachmann als sinnvoll erscheinende Einheit verstanden werden, die einem Passagier während eines Fluges zur Verfügung gestellt wird. Unter einem "Stau- und/oder Ablagebereich" soll vorzugsweise ein Bereich oder ein Element verstanden werden, in dem Utensilien und Literatur verstaubar sind. Eine Verstaumöglichkeit kann vorzugsweise als ein Ablagefach, als ein Ablageregal, als ein verschließbares Staufach, oder als ein Befestigungsmittel, wie beispielsweise ein elastisches Spannband verstanden werden.

Darunter, dass entsprechende Bauteile zu einem Modul "zusammengefasst sind" soll verstanden werden, dass die zusammengefassten Bauteile in einem Montagemodul zusammengefasst sind, in dem sie gemeinsam über entsprechende Montagepunkte, insbesondere über entsprechende Fittings, mit dem Kabinenboden verbindbar sind. Bauteile, die zu einem Modul zusammengefasst sind, sind dazu vorgesehen, über die gleichen Montagepunkte, insbesondere Fittings mit dem Kabinenboden verbunden zu werden. Die zu einem Modul zusammengefassten Bauteile bilden eine Montageeinheit aus, die zusammen in der Flugzeugkabine auf dem Kabinenboden montierbar sind. Unter einem "16G-Modul" soll ein Modul verstanden werden, das für die Zulassung einen 16G-Crashtest durchlaufen muss. Das als 16G-Modul ausgebildete Modul ist für einen 16G-Zulassungstest vorgesehen. Das 16G-Modul umfasst vorzugsweise zumindest alle Bauteile des Flugzeugsitzmoduls, die dazu vorgesehen sind, dass ein Passagier während eines Flugs ordnungsgemäß darauf sitzen kann, wie insbesondere ein Sitz. Unter einem "9G-Modul" soll ein Modul verstanden werden, das für die Zulassung einen 9G-Crashtest durchlaufen muss. Das als 9G-Modul ausgebildete Modul ist für einen 9G-Zulassungstest vorgesehen. Dem 9G-Modul sind vorzugsweise die Bauteile des Flugzeugsitzmoduls zugeordnet, die ein Möbel des Flugzeugsitzbereichs ausbilden, die nicht dazu vorgesehen sind, dass ein Passagier während eines Flugs ordnungsgemäß darauf sitzt. Unter "getrennt voneinander an einem Kabinenboden befestigt" soll verstanden werden, dass die beiden Module über jeweils unterschiedliche Montagepunkte, insbesondere Fittings mit dem Kabinenboden verbindbar sind. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung können die unterschiedlichen Module vorteilhaft separat für ein Zulassungsverfahren in einem entsprechenden Crashtest getestet werden. Durch die entsprechende Zusammensetzung des 16G-Moduls und des 9G-Moduls kann eine besonders vorteilhafte Aufteilung der Bauteile des Flugzeugsitzmoduls erreicht werden. Insbesondere die Bauteile, die in dem 9G-Modul zusammengefasst sind, müssen geringere Lasten in dem entsprechenden Crashtest aushalten und können demnach vorteilhaft schwächer dimensioniert werden. Dadurch können insbesondere Teile des 9G-Moduls und damit das gesamte 9G-Modul besonders leicht ausgebildet werden. Dadurch kann insgesamt ein vorteilhaft leichtes Flugzeugsitzmodul bereitgestellt werden.

Ferner wird vorgeschlagen, dass das erste Umhausungselement einen Teil des separat ausgebildeten 16G-Moduls ausbildet. Vorzugsweise ist das zweite Umhausungselement, das einen Teil des 16G-Moduls bildet, getrennt von dem zweiten Umhausungselement ausgebildet, das einen Teil des 9G-Moduls ausbildet. Dadurch kann das erste Umhausungselement besonders einfach an den Kabinenboden angebunden werden. Weiter wird vorgeschlagen, dass das 16G-Modul und/oder das 9G-Modul jeweils dazu vorgesehen ist, über drei Montagepunkte fest mit dem Kabinenboden gekoppelt zu sein. Unter einem "Montagepunkt" soll vorzugsweise ein Punkt verstanden werden, an dem ein Modul über ein entsprechendes Befestigungsmittel, wie insbesondere ein Fitting fest auf einer Aufständerebene, insbesondere dem Kabinenboden fest montierbar ist. Dadurch können das 16G-Modul und das 9G-Modul jeweils besonders vorteilhaft angebunden werden.

Das 16G-Modul weist einen Montagerahmen auf, der zur Anbindung an den Kabinenboden vorgesehen ist, und umfasst dazu drei Fittingelemente die jeweils zur Anbindung an eine Befestigungsschiene vorgesehen sind. Unter einem "Montagerahmen" soll vorzugsweise ein struktureller Rahmen verstanden werden, auf dem die entsprechenden Bauteile des 16G-Moduls fest montierbar sind. Vorzugsweise ist das Grundgestell des Flugzeugsitzes auf dem Montagerahmen montiert. Vorzugsweise ist das Grundgestell des Flugzeugsitzes über eine Linearführung verschiebbar auf dem Montagerahmen angebunden. Unter einem "Fittingelement" soll ein Element verstanden werden, das in zumindest einem Betriebszustand zu einer Befestigung eines Flugzeugsitzmoduls an einem Boden, insbesondere an einem Kabinenboden einer Flugzeugkabine, vorgesehen ist, und dazu in einer Ausnehmung in dem Kabinenboden, insbesondere in einer Befestigungsschiene in dem Boden, gehalten ist. Vorzugsweise weist das Fittingelement zumindest eine Befestigungseinheit auf, die zumindest ein Befestigungsmittel umfasst. Insbesondere ist das Fittingelement in der Ausnehmung des Bodens beweglich entlang einer zumindest im Wesentlichen parallel zu dem Boden ausgerichteten Achse gelagert. In einem fest montierten Zustand ist das Fittingelement positionssicher in der Befestigungsschiene in dem Kabinenboden befestigt. Vorzugsweise ist das Fittingelement in einem montierten Zustand fest mit einer tragenden Struktur des entsprechenden Moduls, insbesondere dem Montagerahmen verbunden. Dadurch kann das 16G-Modul besonders einfach und sicher an dem Kabinenboden montierbar ausgestattet werden.

Der Montagerahmen weist einen Hauptmontagebereich und einen sich von dem Hauptmontagebereich weg erstreckenden Träger auf, wobei in dem Hauptmontagebereich der Flugzeugsitz angebunden ist. Der Hauptmontagebereich bildet vorzugsweise eine Linearführung aus, über die der Flugzeugsitz mit seinem Grundgestell verschiebbar in dem Hauptmontagebereich gelagert ist. Dadurch kann der Montagerahmen besonders einfach und mit vorteilhaftem geringem Gewicht zur Anbindung des Flugzeugsitzes ausgebildet werden.

An einem dem Hauptmontagebereich entfernten Ende des Trägers ist eines der Fittingelemente angebunden. Dadurch kann der Montagerahmen besonders vorteilhaft und funktionssicher auf dem Kabinenboden montiert werden.

In dem Hauptmontagebereich des Montagerahmens sind zwei der Fittingelemente angeordnet, die zur Anbindung an dieselbe Befestigungsschiene vorgesehen sind. Die beiden in dem Hauptmontagebereich angebrachten Fittingelemente sind im montierten Zustand in unterschiedlichen Positionen in derselben Befestigungsschiene fixiert. Dadurch kann der Montagerahmen zur Anbindung des Flugzeugsitzes in einem Winkel von 35 bis 80 Grad besonders einfach und sicher an den Kabinenboden angebunden werden.

Außerdem wird vorgeschlagen, dass das Flugzeugsitzmodul ein Türelement aufweist, das verschiebbar mit dem ersten Umhausungselement verbunden ist und einen Teil des 16G-Moduls ausbildet. Unter einem "Türelement" soll vorzugsweise ein Element verstanden werden, das dazu vorgesehen ist, einen Durchgangsbereich zu dem Flugzugsitzbereich zu verschließen. Das Türelement ist vorzugsweise über eine Linearführung linear verschiebbar zu dem ersten Umhausungselement gelagert. Die Türeinheit ist über das erste Umhausungselement und den Montagerahmen des 16G-Moduls an dem Kabinenboden befestigt. Dadurch kann das Türelement besonders vorteilhaft in das Flugzeugsitzmodul integriert werden.

Es wird weiter vorgeschlagen, dass das Flugzeugsitzmodul ein Armlehnenelement aufweist, das verschiebbar an dem ersten Umhausungselement angebunden ist und einen Teil des 16G-Moduls ausbildet. Unter einem "Armlehnenelement" soll vorzugsweise ein Element verstanden werden, das für einen auf dem Flugzeugsitz sitzenden Passagier einen Armablagebereich ausbildet. Das Armlehnenelement ist zumindest im Wesentlichen neben dem Sitzboden des Flugzeugsitzes angeordnet. Das Armlehnenelement ist zwischen dem Sitzboden des Flugzeugsitzes und einem Durchgangsbereich zu dem Flugzeugsitzbereich angeordnet. Das Armlehnenelement ist vorzugsweise verstellbar gelagert. Vorzugsweise ist das Armlehnenelement sowohl in seiner Höhe verstellbar, als auch in seiner Horizontalposition verstellbar. Dadurch kann das Armlehnenelement besonders vorteilhaft in das Flugzeugsitzmodul integriert und der Flugzeugsitz vorteilhaft komfortabel ausgebildet werden.

Ferner wird vorgeschlagen, dass das 9G-Modul durch zumindest drei zueinander beabstandet angeordnete Fittingelemente dazu vorgesehen ist, mit dem Kabinenboden verbunden zu werden. Vorzugsweise weist das 9G-Modul einen Montagerahmen auf, über den die drei Fittingelemente, mit denen das 9G-Modul an den Kabinenboden anbindbar ist, miteinander verbunden sind. Der Montagerahmen bildet einen Grundrahmen des 9G-Moduls aus, auf dem die Bauteile, die das 9G-Modul ausbilden, montiert sind. Der Montagerahmen des 9G-Moduls ist vorzugsweise von mehreren Trägern ausgebildet, an denen die Fittingelemente fest anbindbar sind. Die Träger des Montagerahmens bilden vorzugsweise eine Grundstruktur aus, auf der die weiteren Bauteile des 9G-Moduls montiert sind. Der Montagerahmen des 9G-Moduls ist getrennt von dem Montagerahmen des 16G-Moduls ausgebildet. Der Montageahmen des 9G-Moduls weist keine Verbindung zu dem Montagerahmen des 16G-Moduls auf. Dadurch kann das 9G-Modul besonders vorteilhaft und sicher auf dem Kabinenboden montiert werden.

Zudem wird vorgeschlagen, dass das erste Umhausungselement ein Teil des separat ausgebildeten 9G-Moduls ausbildet. Vorzugsweise können das erste Umhausungselement und das zweite Umhausungselement der Umhausungseinheit in der Ausgestaltung, in der beide Umhausungselemente dem 9G-Modul zugeordnet sind, fest miteinander verbunden, oder einstückig miteinander ausgebildet sein. Ist das erste Umhausungselement als ein Teil des separat ausgebildeten 9G-Moduls ausgebildet, so ist es vorteilhaft möglich, das Türelement ebenfalls als ein Teil des 9G-Moduls auszubilden. Dadurch könnte auch die Türeinheit besonders vorteilhaft leicht und strukturell weniger aufwendig ausgebildet werden. Dadurch kann die erste Umhausungseinheit besonders vorteilhaft an den Kabinenboden angebunden, und insbesondere leicht ausgebildet werden, da sie in dem 9G-Crashtest zugelassen werden kann.

Weiter wird vorgeschlagen, dass das 16G-Modul und das 9G-Modul frei von einer direkten festen Verbindung ausgebildet sind. Unter "frei von einer direkten festen Verbindung" soll vorzugsweise verstanden werden, dass das 16G-Modul und das 9G-Modul nicht mittels einer kraft-, form-, oder stoffschlüssigen Verbindung direkt und fest miteinander verbunden sind. Zwischen dem 16G-Modul und dem 9G-Modul, die frei von einer direkten Verbindung sind, ist vorzugsweise keine Kraftübertragung möglich. Vorzugsweise ist es denkbar, dass das 16G-Modul und das 9G-Modul in einem Bereich ihrer Umhausungselemente einen Spalt aufweisen, der in einem montierten Zustand von einem elastischen Element, wie insbesondere einer Gummilippe geschlossen ist, über das keine Kraftübertragung zwischen dem ersten Umhausungselement, das einen Teil des 16G-Moduls ausbildet, und dem zweiten Umhausungselement, das einen Teil des 9G-Moduls ausbildet, möglich ist. Dadurch können die beiden Module besonders vorteilhaft getrennt voneinander ausgebildet werden und eine Kraftübertragung zwischen den beiden Modulen kann vorteilhaft verhindert werden.

Ferner wird vorgeschlagen, dass das erste Umhausungselement und das zweite Umhausungselement einen Überlappungsbereich aufweisen, in dem sich die beiden Umhausungselemente überlappen. Unter einem "Überlappungsbereich" soll ein Bereich verstanden werden, in dem sich die beiden Umhausungselemente, insbesondere in einer Horizontalebene, überlappen. Dadurch kann der Flugzeugsitzbereich von den beiden Umhausungselementen besonders einfach und vorteilhaft abgetrennt werden, ohne dass die Umhausungselemente direkt miteinander gekoppelt sind.

Es wird weiterhin vorgeschlagen, dass ein Bereich zwischen der Ottomane und dem Flugzeugsitz zumindest teilweise frei von einem Podest ausgebildet ist. Unter einem "Podest" soll vorzugsweise ein gegenüber dem Kabinenboden erhöhtes Bauteil verstanden werden, das beispielsweise einen Boden ausbilden kann. Unter "zumindest teilweise frei von einem Podest" soll vorzugsweise verstanden werden, dass in zumindest einem Teilbereich, vorzugsweise in dem gesamten Bereich zwischen dem Flugzeugsitz und der Ottomane, bzw. einem Bodenelement der vorderen Konsoleneinheit kein Podest angeordnet ist. In einem Bereich, der frei von einem Podest ausgebildet ist, bildet insbesondere der Kabinenboden der Flugzeugkabine einen Boden des Flugzeugsitzbereichs aus. Dadurch kann der Flugzeugsitzbereich besonders vorteilhaft zugänglich ausgebildet werden, da es von einem Mittelgang vorteilhaft keinen Höhenunterschied zu einem Boden des Flugzeugsitzbereichs gibt.

Zudem wird eine Flugzeugkabine mit einem einzelnen Mittelgang und zumindest einer Flugzeugsitzanordnung mit mehreren Flugzeugsitzmodulen, die zwischen dem Mittelgang und einer ersten Bordwand angeordnet ist, und mit einer zweiten Flugzeugsitzanordnung mit mehreren Flugzeugsitzmodulen, die zwischen dem Mittelgang und einer zweiten Bordwand angeordnet ist, vorgeschlagen. Dadurch kann eine besonders vorteilhafte Flugzeugkabine bereitgestellt werden.

Ferner wird vorgeschlagen, dass die Flugzeugsitzmodule der Flugzeugsitzanordnung einen Sitzabstand X von 838 mm (33 Zoll) bis 1016 mm (40 Zoll) aufweisen und jeweils einen Flugzeugsitz aufweisen, der in einem Winkel α von 30 bis 80 Grad, vorzugsweise 45 bis 65 Grad zu einer Flugzeugkabinenmittelachse montiert ist. Dadurch kann die Flugzeugkabine mit einer besonders vorteilhaft platzsparenden Flugzeugsitzanordnung bereitgestellt werden.

Das erfindungsgemäße Flugzeugsitzmodul soll hierbei nicht auf die oben beschriebene Anwendung und Ausführungsform beschränkt sein. Insbesondere kann das erfindungsgemäße Flugzeugsitzmodul zu einer Erfüllung einer hierin beschriebenen Funktionsweise eine von einer hierin genannten Anzahl von einzelnen Elementen, Bauteilen und Einheiten abweichende Anzahl aufweisen, insofern sie in den Schutzbereich der beigefügten Ansprüche fallen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, insofern sie in den Schutzbereich der beigefügten Ansprüche fallen.

Es zeigen:
- Fig. 1: eine schematische Draufsicht einer erfindungsgemäßen Flugzeugkabine mit einem einzigen Mittelgang und mit einem Layout aus zwei Reihen an Flugzeugsitzanordnungen, die jeweils erfindungsgemäße Flugzeugsitzmodule umfassen,
- Fig. 2: eine schematische Ansicht eines einzelnen Flugzeugsitzmoduls von einer Seite,
- Fig. 3: eine schematische Ansicht von unten auf das Flugzeugsitzmodul und entsprechenden Montagepunkten für ein 16G-Modul und ein 9G-Modul des Flugzeugsitzmoduls,
- Fig. 4: eine schematische Ansicht eines Montagerahmens des 16G-Moduls,
- Fig. 5: eine schematische Draufsicht auf mehrere Flugzeugsitzmodule mit entsprechenden Montagepunkten für das 16G-Modul und das 9G-Modul des Flugzeugsitzmoduls und
- Fig. 6: eine schematische Draufsicht auf mehrere Flugzeugsitzmodule mit entsprechenden Montagepunkten für das 16G-Modul und das 9G-Modul des Flugzeugsitzmoduls in einem zweiten Ausführungsbeispiel.

### Beschreibung der Ausführungsbeispiele

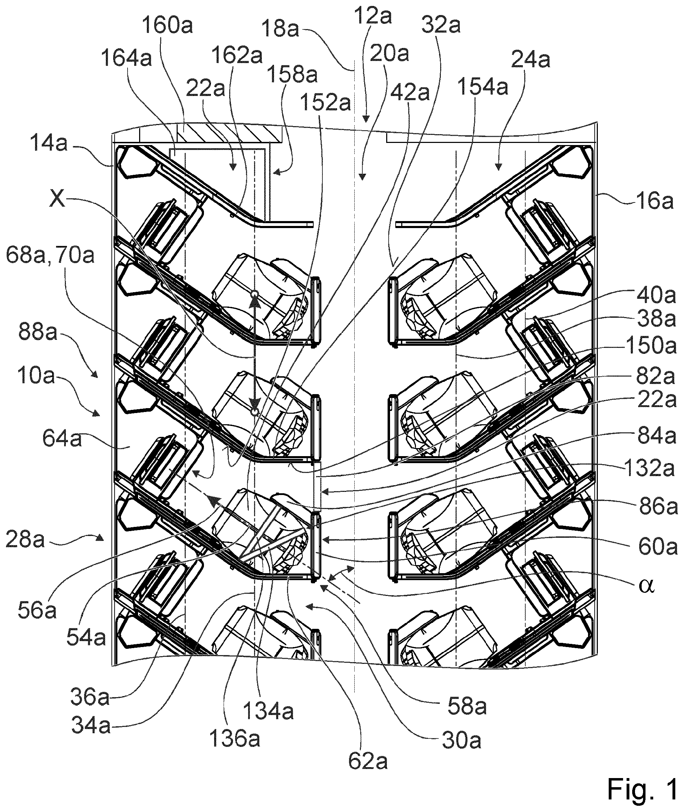

Die Figur 1 zeigt einen Teil einer erfindungsgemäßen Flugzeugkabine 12a. In der Figur 1 ist ein Ausschnitt einer Flugzeugkabine 12a gezeigt. Die Flugzeugkabine 12a weist zwei gegenüberliegende Bordwände 14a, 16a auf, die die Flugzeugkabine 12aa seitlich begrenzen. Die erste Bordwand 14a ist als eine von einem Heck der Flugzeugkabine 12a gesehen linke Bordwand 14a ausgebildet. Die zweite Bordwand 16a ist als eine von einem Heck der Flugzeugkabine 12a gesehen rechte Bordwand 16a ausgebildet. Die Flugzeugkabine 12a bildet eine Flugzeugkabinenmittelachse 18a aus. Die Flugzeugkabinenmittelachse 18a ist jeweils mittig zwischen den gegenüberliegenden Bordwänden 14a, 16a der Flugzeugkabine 12a angeordnet. Die Flugzeugkabinenmittelachse 18a ist als eine Längsachse der Flugzeugkabine 12a ausgebildet. Die Flugzeugkabinenmittelachse 18a ist parallel zu einer Aufständerebene der Flugzeugkabine 12a ausgerichtet. Die Flugzeugkabine 12a weist einen Kabinenboden 32a auf. Der Kabinenboden 32a bildet die Aufständerebene der Flugzeugkabine 12a aus. Die Flugzeugkabine 12a weist einen Mittelgang 20a auf. Der Mittelgang 20a ist als ein einzelner Gang ausgebildet. Die Flugzeugkabine 12a weist lediglich den einen Mittelgang 20a auf. Der Mittelgang 20a ist mittig zwischen den gegenüberliegenden Bordwänden 14a, 16a der Flugzeugkabine 12a angeordnet. Der Mittelgang 20a verläuft koaxial zu der Flugzeugkabinenmittelachse 18a der Flugzeugkabine 12a. Die Flugzeugkabine 12a weist mehrere Befestigungsschienen 34a, 36a, 38a, 40a auf. Die Flugzeugkabine 12a weist jeweils zwei als Paar ausgebildete Befestigungsschienen 34a, 36a, 38a, 40a auf. Je zwei Befestigungsschienen 34a, 36a, 38a, 40a sind zwischen dem Mittelgang 20a und einer der Bordwände 14a, 16a angeordnet. Die Befestigungsschienen 34a, 36a, 38a, 40a verlaufen parallel zu der Flugzeugkabinenmittelachse 18a. Die Befestigungsschienen 34a, 36a, 38a, 40a sind in den Kabinenboden 32a eingelassen. Die Befestigungsschienen 34a, 36a, 38a, 40a verlaufen parallel zu dem Kabinenboden 32a. Die Befestigungsschienen 34a, 36a und die Befestigungsschienen 38a, 40a sind jeweils paarweise angeordnet. Die paarweise angeordneten Befestigungsschienen 34a, 36a, 38a, 40a weisen beispielsweise einen Abstand von 530 mm auf.

Die Figur 1 zeigt zwei Flugzeugsitzanordnungen 22a, 24a. Die Flugzeugkabine 12a umfasst die erste Flugzeugsitzanordnung 22a und die zweite Flugzeugsitzanordnung 24a. Die erste Flugzeugsitzanordnung 22a ist auf einer linken Seite des Mittelgangs 20a angeordnet. Die erste Flugzeugsitzanordnung 22a ist über die Befestigungsschienen 34a, 36a in der Flugzeugkabine 12a befestigt. Die erste Flugzeugsitzanordnung 22a ist also zwischen dem Mittelgang 20a und der linken Bordwand 14a angeordnet. Die zweite Flugzeugsitzanordnung 24a ist auf einer rechten Seite des Mittelgangs 20a angeordnet. Die zweite Flugzeugsitzanordnung 24a ist über die Befestigungsschienen 38a, 40a in der Flugzeugkabine 12a befestigt Die zweite Flugzeugsitzanordnung 24a ist also zwischen dem Mittelgang 20a und der rechten Bordwand 16a angeordnet. Die beiden Flugzeugsitzanordnungen 22a, 24a sind auf gegenüberliegenden Seiten des Mittelgangs 20a angeordnet. Die beiden Flugzeugsitzanordnungen 22a, 24a sind im Wesentlichen gleich ausgebildet. Die beiden Flugzeugsitzanordnungen 22a, 24a sind spiegelbildlich identisch ausgebildet. Die zweite Flugzeugsitzanordnung 24a bildet eine Spiegelung der ersten Flugzeugsitzanordnung 22a an der Flugzeugkabinenmittelachse 18a aus. Deshalb soll im Folgenden lediglich die erste Flugzeugsitzanordnung 22a näher beschrieben werden. Eine Erläuterung der zweiten Flugzeugsitzanordnung 24a kann anhand der folgenden Beschreibung der ersten Flugzeugsitzanordnung 22a erfolgen.

Die Flugzeugsitzanordnung 22a umfasst ein erstes Flugzeugsitzmodul 10a. Das erste Flugzeugsitzmodul 10a begrenzt einen Flugzeugsitzbereich 26a. Die Flugzeugsitzanordnung 22a umfasst ein zweites Flugzeugsitzmodul 28a. Das zweite Flugzeugsitzmodul 28a begrenzt einen weiteren Flugzeugsitzbereich 30a. Das zweite Flugzeugsitzmodul 28a ist unmittelbar neben dem ersten Flugzeugsitzmodul 10a angeordnet. Die beiden Flugzeugsitzmodule 10a, 28a sind unmittelbar angrenzend aneinander angeordnet. Die Flugzeugsitzanordnung 22a umfasst weitere Flugzeugsitzmodule. Die Flugzeugsitzmodule 10a, 28a der Flugzeugsitzanordnung 22a sind alle hintereinander in einer Reihe angeordnet. Die Flugzeugsitzmodule 10a, 28a der Flugzeugsitzanordnung 22a sind alle im Wesentlichen identisch ausgebildet. Grundsätzlich wäre es denkbar, dass einzelne Flugzeugsitzmodule 10a, 28a kleine Unterschiede aufweisen. Insbesondere ist es denkbar, dass ein vorderstes der in einer Reihe angeordneten Flugzeugsitzmodule oder ein hinterstes der in einer Reihe angeordneten Flugzeugsitzmodule der Flugzeugsitzanordnung 22a teilweise unterschiedlich ausgebildet sind. Die Formulierung "erstes Flugzeugsitzmodul" und "zweites Flugzeugsitzmodul" bezieht sich nicht auf eine Position in der Reihe an Flugzeugsitzmodulen, sondern ist lediglich zur Unterscheidung der zwei im Folgenden näher beschriebenen, direkt nebeneinander angeordneten Flugzeugsitzmodule 10a, 28a gedacht. Im Folgenden wird lediglich das eine Flugzeugsitzmodul 10a näher beschrieben, wobei eine Erläuterung auch für die weiteren Flugzeugsitzmodule 28a gilt. Das Flugzeugsitzmodul 10a weist einen Flugzeugsitz 42a auf. Der Flugzeugsitz 42a weist einen Sitzboden 44a und eine Rückenlehne 46a auf. Zudem weist der Flugzeugsitz 42a ein schwenkbar an einem vorderen Ende des Sitzbodens 44a angeordnetes Beinstützelement 48a auf. Der Flugzeugsitz 42a weist ein Grundgestell 50a auf. Das Grundgestell 50a bildet einen tragenden Grundrahmen des Flugzeugsitzes 42a aus. Das Grundgestell 50a ist als ein Montagegrundrahmen des Flugzeugsitzes 42a ausgebildet.

Der Flugzeugsitz 42a ist als ein Full-Flat-Sitz ausgebildet. Der Flugzeugsitz 42a kann zwischen einer TTL-Sitzstellung, also einer aufrechten Sitzstellung und einer Liegestellung verstellt werden. In der Liegestellung bildet der Flugzeugsitz 42a eine im Wesentlichen ebene Liegefläche aus. In der Liegestellung bilden der Sitzboden 44a, die Rückenlehne 46a und das Fußstützelement 48a jeweils einen Teil der Liegefläche des Flugzeugsitzes 42a aus. Grundsätzlich wäre es auch denkbar, dass der Flugzeugsitz 42a kein Beinstützelement 48a aufweist. Der Flugzeugsitz 42a weist eine Kinematikeinheit 52a auf, mittels der der Flugzeugsitz 42a elektro-mechanisch zwischen der TTL-Stellung und der Liegestellung verfahren werden kann. Der Flugzeugsitz 42a weist weiter ein Kopfstützelement auf, das in einem oberen Bereich der Rückenlehne 46a angebracht ist. Das Kopfstützelement ist vorzugsweise höhenverstellbar an der Rückenlehne 46a angebunden. Der Sitzboden 44a bildet eine Sitzbreite 156a des Flugzeugsitzes 42a aus. Die Sitzbreite 156a des Flugzeugsitzes 42a ist als eine Breite ausgebildet, die orthogonal zu der Mittelachse 54a des Flugzeugsitzes 42a an seiner breitesten Stelle gemessen wird. Die Sitzbreite 156a des Flugzeugsitzes 42a beträgt vorzugsweise 508 mm (20 Zoll).

Der Flugzeugsitz 42a umfasst eine Dreipunktgurteinheit 132a. Die Dreipunktgurteinheit 132a ist zur Fixierung des Passagiers auf dem Flugzeugsitz 42a vorgesehen. Mittels der Dreipunktgurteinheit 132a kann ein Passagier auf dem Flugzeugsitz 42a angeschnallt werden. Die Dreipunktgurteinheit 132a ist als ein Dreipunktgurt ausgebildet. Die Dreipunktgurteinheit 132a umfasst einen Schultergurt 134a und einen Beckengurt 136a. Der Beckengurt 136a ist dazu vorgesehen, den Passagier in einem Becken- und Hüftbereich zu sichern. Der Beckengurt 136a ist in einem geschlossenen Zustand der Dreipunktgurteinheit 132a dazu vorgesehen, den Sitzboden 44a zu überspannen. Der Beckengurt 136a ist dazu vorgesehen, dass der Passagier in einem geschlossenen Zustand der Dreipunktgurteinheit 132a mit einem Becken- und Schoßbereich zwischen dem Sitzboden 44a und dem Beckengurt 136a angeordnet ist. Der Schultergurt 134a ist dazu vorgesehen, einen Oberkörper des Passagiers an dem Flugzeugsitz 42a zu sichern. Der Schultergurt 134a ist insbesondere dazu vorgesehen, zur Sicherung des Passagiers auf dem Flugzeugsitz 42a von einem oberen Bereich der Rückenlehne 46a quer über eine Rückenlehnenfläche der Rückenlehne 46a an ein unteres Ende der Rückenlehne 46a zu verlaufen. Der Schultergurt 134a verläuft in einem geschlossenen Zustand der Dreipunktgurteinheit 132a quer über einen Torso des Passagiers, so dass dieser gesichert ist. Der Schultergurt 134a ist auf einer rechten Seite der Rückenlehne 46a in einem oberen Bereich angeordnet. Der Schultergurt 134a ist an einer dem Mittelgang 20a zugewandten Seite der Rückenlehne 46a angeordnet. Der Schultergurt 134a ist auf einer einer Front der Flugzeugkabine 12a zugewandten Seite der Rückenlehne 46a angebracht.

Zur Anbindung der Dreipunktgurteinheit 132a an den Flugzeugsitz 42a weist die Dreipunktgurteinheit 132a eine Anbindungseinheit auf. Die Anbindungseinheit ist dazu vorgesehen, die Dreipunktgurteinheit 132a betriebssicher und fest an den Flugzeugsitz 42a anzubinden. Die Anbindungseinheit weist einen ersten Anbindungspunkt auf, an dem der Beckengurt 136a mit einem ersten Ende an dem Grundgestell 50a des Flugzeugsitzes 42a angebunden ist. Über einen zweiten Anbindungspunkt ist der Beckengurt 136a mit seinem zweiten Ende an dem Grundgestell 50a des Flugzeugsitzes 42a angebunden. Die Dreipunktgurteinheit 132a weist ein nicht näher dargestelltes Gurtschloss auf, über das der Beckengurt 136a geöffnet werden kann. In einem geschlossenen Zustand ist der Beckengurt 136a durch das Gurtschloss geschlossen. Ein dritter Anbindungspunkt der Dreipunktgurteinheit 132a ist in einem oberen Bereich der Rückenlehne 46a angeordnet. Über den dritten Anbindungspunkt ist der Schultergurt 134a fest mit einer tragenden Struktur der Rückenlehne 46a verbunden. Der Schultergurt 134a ist zum Schließen der Dreipunktgurteinheit 132a dazu vorgesehen, mit dem mit dem Beckengurt 136a verbundenen Gurtschloss gekoppelt zu werden. Dazu weist der Schultergurt 134a an seinem losen Ende ein Koppelelement auf, das mit einem Formschlusselement des Gurtschlosses formschlüssig koppelbar ist. Die Dreipunktgurteinheit 132a weist eine Gurtspanneinheit auf, die in dem dritten Anbindungspunkt des Schultergurts 134a integriert ist. Die Gurtspanneinheit ist dazu vorgesehen, den Schultergurt 134a, insbesondere in einem Crashfall zu spannen. Durch die Dreipunkhalteeinheit 132a kann ein auf dem Flugzeugsitz 42a sitzender Passagier besonders vorteilhaft gesichert werden, da ein Verdrehen eines Torsos eines Passagiers oder Crashtestdummys in einem Crashfall oder Crashtest minimiert, bzw. vorteilhaft verhindert werden kann. Insbesondere eine Verdrehung eines Schulterbereichs des Passagiers kann durch die Dreipunkthalteinheit 132a vorteilhaft verhindert werden. Grundsätzlich ist es auch denkbar, dass die Dreipunktgurteinheit 132a auf eine andere, dem Fachmann als sinnvoll erscheinende Weise ausgebildet ist, insbesondere ein anderes Gurtschloss oder andere Anbindungspositionen an dem Flugzeugsitz 42a aufweist.

Der Flugzeugsitz 42a ist dazu vorgesehen, in einem Winkel α von über 30 bis 80 Grad in der Flugzeugkabine 12a montiert zu werden. Vorzugsweise ist der Flugzeugsitz 42a in einem Winkel α von 35 Grad bis 80 Grad in der Flugzeugkabine 12a montiert. In dem gezeigten Ausführungsbeispiel ist der Flugzeugsitz 42a in einem Winkel α von 55 Grad in der Flugzeugkabine 12a montiert. Der Flugzeugsitz 42a bildet eine längs verlaufende Mittelachse 54a aus. Die Mittelachse 54a teilt den Flugzeugsitz 34aa mittig. Die längs verlaufende Mittelachse 54a verläuft parallel zu einer Aufständerebene des Flugzeugsitzes 42a. Der Winkel α, in dem der Flugzeugsitz 42a in der Flugzeugkabine 12a montiert ist, ist zwischen der Flugzeugkabinenmittelachse 18a und der längs verlaufenden Mittelachse 54a des Flugzeugsitzes 34aa gemessen. Der Flugzeugsitz 42a ist um den Winkel α zu der Flugzeugkabinenmittelachse 18a verdreht montiert.

Der Flugzeugsitz 42a weist eine Sitzrichtung 56a auf. Die Sitzrichtung 56a verläuft parallel zu der längs verlaufenden Mittelachse 54a des Flugzeugsitzes 42a. Die Sitzrichtung 56a verläuft im Wesentlichen parallel zu dem Kabinenboden 32a und steht im Wesentlichen senkrecht zu einer von der Rückenlehne 46a ausgebildeten Rückenlehnenfläche in der TTL-Stellung des Flugzeugsitzes 42a. Die Sitzrichtung 56a ist von der Rückenlehnenfläche der Rückenlehne 46a weg gerichtet. Die Sitzrichtung 56a ist als eine Richtung ausgebildet, in die ein Passagier ausgerichtet ist, wenn er ordnungsgemäß auf dem Flugzeugsitz 42a sitzt. Der Flugzeugsitz 42a ist in montiertem Zustand von dem Mittelgang 20a der Flugzeugkabine 12a weg gerichtet. Die Sitzrichtung 56a des Flugzeugsitzes 42a zeigt von dem Mittelgang 20a weg in Richtung der Bordwand 14a.

Die Flugzeugsitzmodule 10a, 28a der Flugzeugsitzanordnung 22a sind in einem Sitzabstand X (Pitch) zueinander in der Flugzeugkabine 12a angeordnet. Alle Flugzeugsitzmodule 10a, 28a der Flugzeugsitzanordnung 22a weisen vorzugsweise jeweils den gleichen Sitzabstand zu dem jeweils direkt benachbarten Flugzeugsitzmodul 10a, 28a der Flugzeugsitzanordnung 22a auf. Der Sitzabstand X ist ein parallel zur Flugzeugkabinenmittelachse 18a gemessener Abstand zwischen den benachbarten Flugzeugsitzmodulen 10a, 28a, insbesondere zwischen entsprechenden gleichen Bauteilen der beiden Flugzeugsitzmodule 10a, 28a. Beispielhaft ist der Sitzabstand zwischen den beiden Flugzeugsitzmodulen 10a, 28a zwischen den Flugzeugsitzen der jeweiligen benachbarten Flugzeugsitzmodule als Sitzabstand X gezeigt. Der Sitzabstand X ist als ein parallel zu der Flugzeugkabinenmittelachse 18a gemessener Abstand zwischen den Flugzeugsitzmittelpunkten der jeweiligen Flugzeugsitze der Flugzeugsitzmodule. Der Sitzabstand X zwischen den benachbarten Flugzeugsitzmodulen 10a, 28a kann vorzugsweise zwischen 838 mm (33 Zoll) und 1016 mm (40 Zoll) betragen. Vorzugsweise weisen die Flugzeugsitzmodule 10a, 28a der Flugzeugsitzanordnung 22a einen Sitzabstand X von 989 mm (35 Zoll) auf. Dieser kurze Sitzabstand X ist insbesondere durch die starke Neigung der Flugzeugsitze 42a um den Winkel α von 30 bis 80 Grad erreichbar.

Der als Full-Flat-Sitz ausgebildete Flugzeugsitz 42a des Flugzeugsitzmoduls 10a bildet in seiner Liegestellung eine besonders komfortabel lange Liegefläche auf. Die Liegefläche des Flugzeugsitzes in seiner Liegestellung weist eine Liegeflächenlänge von 2006 mm (79 Zoll) auf. Grundsätzlich ist es denkbar, dass die Flugzeugsitze in ihrer Liegestellung eine Liegeflächenlänge von 1905 mm (75 Zoll) bis 2032 mm (80 Zoll) aufweisen, je nach Winkel α, in dem die Flugzeugsitze 42a der Flugzeugsitzmodule 10a, 28a in der Flugzeugkabine 12a ausgerichtet sind. Bei einem Winkel α von 65 Grad kann eine Liegeflächenlänge von 2006 mm (79 Zoll) bei einem Sitzabstand X von 989 mm (35 Zoll) erreicht werden. Dadurch kann bei einer guten Packungsdichte der Flugzeugsitzmodule 10a, 28a durch einen kurzen Sitzabstand X durch die Schrägstellung der Flugzeugsitze 42a um den Winkel α eine besonders vorteilhaft lange Liegeflächenlänge erreicht werden. Dadurch kann das Flugzeugsitzmodul 10a, 28a besonders komfortabel ausgebildet werden.

Das Flugzeugsitzmodul 10a umfasst eine Umhausungseinheit 58a. Die Umhausungseinheit 58a ist dazu vorgesehen, den Flugzeugsitzbereich 26a des ersten Flugzeugsitzmoduls 10a zumindest teilweise zu begrenzen. Die Umhausungseinheit 58a begrenzt den Flugzeugsitzbereich 26a des Flugzeugsitzmoduls 10a in einem Bereich des Flugzeugsitzes 42a. Die Umhausungseinheit 58a begrenzt den Flugzeugsitzbereich 26a in einem Bereich hinter dem Flugzeugsitz 42a. Die Umhausungseinheit 58a begrenzt den Flugzeugsitzbereich 26a in einem Bereich seitlich und vor dem Flugzeugsitz 42a. Die Umhausungseinheit 58a weist ein erstes Umhausungselement 60a auf. Das erste Umhausungselement 60a ist dazu vorgesehen, den Flugzeugsitzbereich 26a des Flugzeugsitzmoduls 10a zumindest teilweise zu begrenzen. Das erste Umhausungselement 60a ist im Wesentlichen hinter dem Flugzeugsitz 42a angeordnet. Das erste Umhausungselement 60a trennt den Flugzeugsitzbereich 26a zu dem Mittelgang 20a der Flugzeugkabine 12a ab. Das erste Umhausungselement 60a ist als ein Wandelement ausgebildet. Das erste Umhausungselement 60a erstreckt sich in einem montierten Zustand von dem Kabinenboden 32a bis in einen Bereich oberhalb der Rückenlehne 46a in einer TTL-Stellung des Flugzeugsitzes 42a. Das erste Umhausungselement 60a ist beispielsweise von Kunststoff oder Kunststoffverbundplatten gebildet.

Die Umhausungseinheit 58a weist ein zweites Umhausungselement 62a auf. Das zweite Umhausungselement 62a ist dazu vorgesehen, den Flugzeugsitzbereich 26a des Flugzeugsitzmoduls 10a zumindest teilweise zu begrenzen. Das zweite Umhausungselement 62a begrenzt den Flugzeugsitzbereich 26a des Flugzeugsitzmoduls 10a in einem Bereich seitlich des Flugzeugsitzes 42a. Das zweite Umhausungselement 62a ist im Wesentlichen seitlich und vor dem Flugzeugsitz 42a angeordnet. Das zweite Umhausungselement 62a trennt den Flugzeugsitzbereich 26a zu dem seitlich benachbarten Flugzeugsitzbereich 30a des Flugzeugsitzmoduls 28a ab. Das zweite Umhausungselement 62a ist als ein Wandelement ausgebildet. Das zweite Umhausungselement 62a erstreckt sich in einem montierten Zustand von dem Kabinenboden 32a bis in einen Bereich oberhalb der Rückenlehne 46a in einer TTL-Stellung des Flugzeugsitzes 42a. Das zweite Umhausungselement 62a ist beispielsweise von Kunststoff oder Kunststoffverbundplatten gebildet. Das zweite Umhausungselement 62a erstreckt sich seitlich des Flugzeugsitzes 42a. Das zweite Umhausungselement 62a erstreckt sich von dem Flugzeugsitz 42a in Richtung der Bordwand 14a. Das zweite Umhausungselement 62a begrenzt den Flugzeugsitzbereich 26a des ersten Flugzeugsitzmoduls 10a seitlich zu einer ersten linken Seite hin im Bereich des Flugzeugsitzes 42a und in dem Bereich vor dem Flugzeugsitz 42a. Das zweite Umhausungselement 62a verläuft in einem Bereich vor dem Flugzeugsitz 42a parallel zu einer Sitzrichtung 56a des Flugzeugsitzes 42a. Das zweite Umhausungselement 62a weist einen vorderen Teilbereich auf, der parallel zu einer Sitzrichtung 56a des Flugzeugsitzes 42a ausgerichtet ist. Das zweite Umhausungselement 62a erstreckt sich mit seinem gangentfernten Ende bis kurz vor die Bordwand 14a. Das zweite Umhausungselement 62a weist einen hinteren Teilbereich auf, in dem das zweite Umhausungselement 62a zu dem vorderen Teilbereich gekrümmt ausgebildet ist. Der hintere Teilbereich des zweiten Umhausungselements 62a ist im Bereich des Flugzeugsitzes 42a angeordnet. Der hintere Teilbereich des zweiten Umhausungselements 62a ist in Richtung des Flugzeugsitzes 42a gekrümmt und erstreckt sich bis in einen Bereich hinter den Flugzeugsitz 42a. Der vordere Teilbereich und der hintere Teilbereich des zweiten Umhausungselements 62a sind vorzugsweise einstückig ausgebildet. Grundsätzlich wäre auch eine mehrteilige Ausgestaltung des zweiten Umhausungselements 62a aus mehreren miteinander verbundenen Einzelelementen denkbar.

Das Flugzeugsitzmodul 10a weist eine Konsoleneinheit 64a auf. Die Konsoleneinheit 64a ist frontal vor dem Flugzeugsitz 42a angeordnet. Die Konsoleneinheit 64a ist an der Umhausungseinheit 58a des Flugzeugsitzmoduls 10a angebunden. Die Konsoleneinheit 64a ist an dem zweiten Umhausungselement 62a der Umhausungseinheit 58a montiert. Die Konsoleneinheit 62a weist ein nicht näher dargestelltes Grundgestell auf. Über das Grundgestell ist die Konsoleneinheit 64a mit dem Kabinenboden 32a verbunden. Die Konsoleneinheit 64a weist ein Bodenelement 66a auf. Das Bodenelement 66a bildet einen Grundboden der Konsoleneinheit 64a aus. Das Bodenelement 66a ist als ein Verkleidungselement ausgebildet, das das Grundgestell der Konsoleneinheit 64a umgibt. Das Bodenelement 66a verdeckt das Grundgestell der Konsoleneinheit 64a. Das Flugzeugsitzmodul 10a weist eine Ottomane 68a auf. Die Ottomane 68a stellt einen Fußablagebereich 70a bereit. Die Ottomane 68a ist von der Konsoleneinheit 64a ausgebildet. Der Fußablagebereich 70a ist von einem starren Auflageelement 72a gebildet. Das starre Auflageelement 72a bildet eine gegenüber der Aufständerebene erhöhte Fläche aus. Das den Fußablagebereich 70a ausbildende Auflageelement 72a ist oberhalb des Bodenelements 66a angeordnet. Zwischen dem den Fußablagebereich 70a ausbildenden Auflageelement 72a und dem Bodenelement 66a ist ein Zwischenraum vorhanden. Der Zwischenraum zwischen dem Bodenelement 66a und dem Auflageelement 72a ist vorzugsweise als ein Stau- und/oder Ablagebereich 74a, insbesondere für Handgepäck, ausgebildet. In dem Stau- und/oder Ablagebereich 74a zwischen dem Bodenelement 66a und dem Auflageelement 72a sind vorzugsweise Befestigungsmittel, beispielsweise ein Netzelement oder ein Spannelement zur Sicherung von Handgepäck vorgesehen. Der Fußablagebereich 70a erweitert die von dem Flugzeugsitz 42a in der Liegestellung bereitgestellte Liegefläche. Der Flugzeugsitz 42a, also die Rückenlehne 46a, der Sitzboden 44a, das Beinstützelement 48a und das den Fußablagebereich 70a bildende starre Auflageelement 72a bilden in der Liegeposition des Flugzeugsitzes 42a die ebene Liegefläche aus. Ein Bereich zwischen der Ottomane 68a und dem Flugzeugsitz 42a ist zumindest teilweise frei von einem Podest ausgebildet. Vorzugsweise ist der Bereich zwischen dem Bodenelement 66a der vorderen Konsoleneinheit 64a und dem Flugzeugsitz 42a frei von einem Podest ausgebildet. In dem Bereich zwischen dem Flugzeugsitz 42a und dem Bodenelement 66a der vorderen Konsoleneinheit 64a bildet der Kabinenboden 32a einen Boden des Flugzeugsitzbereichs 26a aus. Dadurch kann von dem Mittelgang 20a ein ebener Boden bis in einen Bereich zwischen dem Flugzeugsitz 42a und der Konsoleneinheit 64a des Flugzeugsitzbereichs 26a geschaffen werden. Insbesondere ist zwischen dem Mittelgang 20a und dem Bereich zwischen dem Flugzeugsitz 42a und der Konsoleneinheit 64a des Flugzeugsitzbereichs 26a keine Stufe angeordnet.

Das Flugzeugsitzmodul 10a weist eine zweite Konsoleneinheit 76a auf. Die Konsoleneinheit 76a ist an einer Innenseite der Umhausungseinheit 58a des Flugzeugsitzmoduls 10a, an dem zweiten Umhausungselement 62a angebracht. Die Konsoleneinheit 76a ist in einem Bereich vor dem Flugzeugsitz 42a angeordnet. Die Konsoleneinheit 76a bildet eine Verstaumöglichkeit 78a aus. Die Verstaumöglichkeit 78a ist dazu vorgesehen, verschiedene Utensilien aufzunehmen. In der Verstaumöglichkeit 78a können unterschiedliche Utensilien, insbesondere während eines Fluges, verliersicher verstaut werden. Das Flugzeugsitzmodul 10a weist eine Monitoreinheit 80a auf. Die Monitoreinheit 80a ist verschwenkbar an der Innenseite des zweiten Umhausungselements 62a angebunden. Die Monitoreinheit 80a ist in einem vorderen Bereich der Umhausungseinheit 58a angebracht. Die Monitorreinheit 80a ist an einem vorderen Bereich der zweiten Konsoleneinheit 76a angebracht. Vorteilhaft ist die Monitoreinheit 80a in die zweite Konsoleneinheit 76a integriert.

Das Flugzeugsitzmodul 10a kann ein Türelement 82a aufweisen. Das Türelement 82a ist verschiebbar an dem ersten Umhausungselement 60a der Umhausungseinheit 58a angeordnet. Das Türelement 82a ist über eine nicht näher dargestellte Lagereinheit an dem ersten Umhausungselement 60a linear verschiebbar gelagert. Das Türelement 82a kann zwischen einer geöffneten und einer geschlossenen Stellung verstellt werden. In der geöffneten Stellung ist das Türelement 82a in dem ersten Umhausungselement 60a der Umhausungseinheit 58a angeordnet. In der geöffneten Stellung gibt das Türelement den Durchgangsbereich zu dem Flugzeugsitzbereich 26a frei. Der Durchgangsbereich des Flugzeugsitzbereichs 26a weist eine Breite von 381 mm (15 Zoll) auf. In der geschlossenen Stellung ist das Türelement 82a aus dem ersten Umhausungselement 60a herausbewegt. In der geschlossenen Stellung verschließt das Türelement 82a den Durchgangsbereich zu dem Flugzeugsitzbereich 26a des Flugzeugsitzmoduls 10a. Grundsätzlich ist es auch denkbar, dass das Flugzeugsitzmodul 10a kein Türelement 82a aufweist, wodurch ein Durchgangsbereich zu dem Flugzeugsitzbereich 26a ständig frei bleibt. Grundsätzlich ist es ebenso denkbar, dass das an dem zweiten Umhausungselement 60a der Umhausungseinheit 58a verschiebbar gelagerte Türelement 82a dazu vorgesehen ist, einen Durchgangsbereich zu einem neben dem Flugzeugsitzmodul 10a, insbesondere hinter dem Flugzeugsitzmodul 10a angeordneten Flugzeugsitzbereich zu verschließen. Dazu wäre es denkbar, dass das beweglich gelagerte Türelement 82a von dem zweiten Umhausungselement 60a aus, in eine Richtung weg von dem vor dem Flugzeugsitzmodul 10a angeordneten Flugzeugsitzmodul 28a in Richtung des dahinter angeordneten Flugzeugsitzmoduls verschiebbar gelagert ist.

Das Flugzeugsitzmodul 10a weist ein erstes Armlehnenelement 84a auf. Das erste Armlehnenelement 84a ist seitlich des Flugzeugsitzes 42a angeordnet. Das erste Armlehnenelement 84a ist auf einer dem Durchgangsbereich zugewandten Seite des Flugzeugsitzes 42a, neben dem Sitzboden 44a angeordnet. Das Armlehnenelement 84a ist verschiebbar mit dem ersten Umhausungselement 60a der Umhausungseinheit 58a verbunden. Das Armlehnenelement 84a ist vorzugsweise über eine Lagereinheit in seiner Höhe verstellbar. Vorzugsweise ist das erste Armlehnenelement 84a ebenfalls in seiner Horizontalposition verstellbar. Auf einer dem ersten Armlehnenelement 84a gegenüberliegenden Seite kann das Flugzeugsitzmodul 10a vorzugsweise ein weiteres Armlehnenelement aufweisen, das an dem Flugzeugsitz 42a oder der Umhausungseinheit 58a montiert ist.

Das Flugzeugsitzmodul 10a ist von zwei separat ausgebildeten Modulen 86a, 88a zusammengesetzt. Das Flugzeugsitzmodul 10a ist von einem 16G-Modul 86a und einem 9G-Modul 88a gebildet. Das 16Ga-Modul 86a und das 9G-Modul 88a sind separat voneinander ausgebildet. Mehrere Bauteile des Flugzeugsitzmoduls 10a bilden jeweils das 9G-Modul 88a bzw. das 16G-Modul 86a aus. Das 16Ga-Modul 86a ist für eine Zulassung mittels eines 16G-Crashtests vorgesehen. Das 16Ga-Modul 86a muss entsprechend den geltenden Zulassungsbedingungen für eine Zulassung im Flugzeugbereich einen 16G-Crashtest durchlaufen. Bei einem 16G-Crashtest wird das 16G-Modul 86a mit einer Beschleunigung von 16 g, also dem 16-fachen der Erdbeschleunigung verzögert oder beschleunigt. Das 9G-Modul 88a ist für eine Zulassung mittels eines 9G-Crashtests vorgesehen. Das 9G-Modul 88a muss entsprechend den geltenden Zulassungsbedingungen für eine Zulassung im Flugzeugbereich einen 9G-Crashtest durchlaufen. Bei einem 9G-Crashtest wird das 9G-Modul 88a mit einer Beschleunigung von 9 g, also dem 9-fachen der Erdbeschleunigung verzögert oder beschleunigt.

Das 16Ga-Modul 86a umfasst den Flugzeugsitz 42a. Der Flugzeugsitz 42a bildet mit seinem Grundgestell 50a, seiner Kinematikeinheit 52a, sowie dem Sitzboden 44a, der Rückenlehne 46a und dem Beinstützelement 48a einen Teil des 16G-Moduls aus. Der Flugzeugsitz 42a bildet mit allen seinen Anbauteilen einen Teil des 16G-Moduls 86a aus. Das 16Ga-Modul umfasst das erste Umhausungselement 60a der Umhausungseinheit 58a. Der Flugzeugsitz 42a und das erste Umhausungselement 60a der Umhausungseinheit 58a sind in dem separat ausgebildeten 16G-Modul zusammengefasst. Das 16Ga-Modul umfasst weiter das mit dem ersten Umhausungselement 60a der Umhausungseinheit 58a verbundene Türelement 82a. Das Türelement 82a bildet einen Teil des 16G-Moduls 86a aus. Ferner umfasst das 16G-Modul 86a das Armlehnenelement 84a. Das Armlehnenelement 84a bildet einen Teil des 16G-Moduls 86a aus. Der Flugzeugsitz 42a, das erste Umhausungselement 60a der Umhausungseinheit 58a, das Türelement 82a und das Armlehnenelement 84a sind zusammen zu dem separat ausgebildeten 16G-Modul 86a zusammengefasst. Grundsätzlich wäre es auch denkbar, dass das 16G-Modul 86a weitere Bauteile des Flugzeugsitzmoduls 10a umfasst. Das 16Ga-Modul 86a bildet eine Montagebaugruppe aus.

Das 16Ga-Modul 86a weist einen Montagerahmen 90a auf. Der Montagerahmen 90a ist zur Anbindung an den Kabinenboden 32a vorgesehen. Der Montagerahmen 90a ist dazu vorgesehen, das 16G-Modul an den Kabinenboden 32a anzubinden. Über den Montagerahmen 90a ist das 16G-Modul 86a an die Befestigungsschienen 34a, 36a gekoppelt. Alle Teile des 16G-Moduls 86a sind an dem Montagerahmen 90a befestigt. Der Montagerahmen 90a weist einen Hauptmontagebereich 92a auf. Der Hauptmontagebereich 92a ist dazu vorgesehen, dass der Flugzeugsitz 42a darauf angebunden ist. Der Hauptmontagebereich 92a ist im Wesentlichen rechteckig ausgebildet. Der Hauptmontagebereich 92a bildet eine Hauptplattform des Montagerahmens 90a aus. Der Hauptmontagebereich 92a weist zwei Führungsschienen 94a, 96a auf. Die Führungsschienen 94a, 96a sind zur Anbindung des Flugzeugsitzes 42a vorgesehen. Die Führungsschienen 94a, 96a sind als Gleitschienen ausgebildet. Die Führungsschienen 94a, 96a verlaufen in einem montierten Zustand im Wesentlichen parallel zum Kabinenboden 32a. Grundsätzlich ist es auch denkbar, dass die Führungsschienen 94a, 96a in montierten Zustand geneigt zu dem Kabinenboden 32a ausgerichtet sind. Die Führungsschienen 94a, 96a verlaufen parallel zu der Mittelachse 54a des Flugzeugsitzes 42a. Die Führungsschienen 94a, 96a sind zur Anbindung des Grundgestells 50a des Flugzeugsitzes 42a vorgesehen. Der Flugzeugsitz 42a ist mit seinem Grundgestell 50a verschiebbar auf den Führungsschienen 94a, 96a und damit verschiebbar auf dem Montagerahmen 90a gelagert. Über die Kinematikeinheit 52a ist das Grundgestell 50a und damit der Flugzeugsitz 42a relativ zu dem Montagerahmen bewegbar. Der Hauptmontagebereich 92a weist vorzugsweise zwei parallel verlaufende Träger 98a, 100a auf. Die Träger 98a, 100a verlaufen im Wesentlichen parallel zu der Mittelachse 54a des Flugzeugsitzes 42a. Die Träger 98a, 100a sind vorzugsweise über mehrere Querstreben miteinander verbunden. Die Träger 98a, 100a und die Querstreben bilden eine Grundstruktur des Hauptmontagebereichs 92a aus. Auf einer Oberseite der Träger 98a, 100a sind die Führungsschienen 94a, 96a angebunden. Vorteilhaft sind die Führungsschienen 94a, 96a einstückig mit den Trägern 98a, 100a ausgebildet. Grundsätzlich ist es auch denkbar, dass die Führungsschienen 94a, 96a auf einer Oberseite der Träger 98a, 100a form- und/oder kraftschlüssig angebunden sind, beispielsweise durch Verschraubungen. Der Hauptmontagebereich 92a weist zwei Haltestege 102a, 104a auf, die sich auf der rechten Seite des Hauptmontagebereichs 92a von dem rechten Träger 98a weg erstrecken. Die Haltestege 102a, 104a sind in einem Winkel von 90 Grad zu dem Träger 98a des Hauptmontagebereichs 92a ausgerichtet. Die Haltestege 102a, 104a sind zur Anbindung des Armlehnenelements 84a vorgesehen. Die Haltestege 102a, 104a weisen an einem dem Träger 98a entfernten Bereich einen Montagepunkt für das Armlehnenelement 84a auf. Über die Haltestege 102a, 104a und die entsprechenden Montagepunkte ist das Armlehnenelement 84a fest mit dem Montagerahmen 90a verbunden. Der Hauptmontagebereich 92a weist zwei weitere Haltestege 106a, 108a auf. Die Haltestege 106a, 108a erstrecken sich von dem Hauptmontagebereich 92a in einen Bereich hinter den Flugzeugsitz 42a. Die zwei weiteren Haltestege 106a, 108a sind zur Anbindung des ersten Umhausungselements 60a der Umhausungseinheit 58a vorgesehen. Die zwei weiteren Haltestege 106a, 108a weisen an einem dem Hauptmontagebereich 92a entfernten Bereich jeweils einen Montagepunkt für das erste Umhausungselement 60a der Umhausungseinheit 58a auf. Über die Haltestege 106a, 108a und die entsprechenden Montagepunkte ist das erste Umhausungselement 60a der Umhausungseinheit 58a fest mit dem Montagerahmen 90a verbunden. Der Montagerahmen 90a weist einen Anbindungsträger 110a auf. Der Anbindungsträger 110a ist zur Kopplung mit der Befestigungsschiene 34a der Flugzeugkabine 12a vorgesehen. Der Anbindungsträger 110a ist im Bereich des Hauptmontagebereichs 92a angeordnet. Der Anbindungsträger 110a ist Teil des Hauptmontagebereichs 92a. Der Anbindungsträger 110a ist unterhalb, also auf einer Unterseite der Träger 98a, 100a angeordnet. Der Anbindungsträger 110a verläuft schräg zu den Trägern 98a, 100a. Der Anbindungsträger 110a schließt mit den Trägern 98a, 100a jeweils den Winkel α ein, um den der Flugzeugsitz 42a in der Flugzeugkabine 12a verdreht montiert ist. Die Träger 98a, 100a, die Haltestege 102a, 104a, 106a, 108a und der Anbindungsträger 110a des Hauptmontagebereichs 92a sind vorzugsweise einstückig miteinander ausgebildet. Der Hauptmontagebereich 92a ist vorzugsweise aus einem Metall, wie beispielsweise einem Aluminium oder Magnesium gefertigt. Grundsätzlich ist es ebenso denkbar, dass die Träger 98a, 100a, die Haltestege 102a, 104a, 106a, 108a und der Anbindungsträger 110a des Hauptmontagebereichs 92a zumindest teilweise als separate Einzelteile ausgebildet sind, die in einem montierten Zustand kraft- und/oder formschlüssig miteinander verbunden sind.

Der Montagerahmen 90a weist einen sich von dem Hauptmontagebereich 92a weg erstreckenden Träger 112a auf. Der Träger 112a erstreckt sich von dem Hauptmontagebereich 92a des Montagerahmens 90a schräg weg. Der Träger 112a ist in einem Winkel von 90 Grad zu dem Anbindungsträger 110a des Hauptmontagebereichs 92a ausgerichtet. Grundsätzlich ist es auch denkbar, dass der Träger 112a in einem anderen Winkel zu dem Anbindungsträger 110a ausgerichtet ist. Der Träger 112a ist als ein Montageträger ausgebildet. Der Träger 112a ist rohrförmig ausgebildet. Der Träger 112a weist einen kreisringförmigen Querschnitt auf. Grundsätzlich ist es auch denkbar, dass der Träger 112a einen anderen Querschnitt aufweist. Der Träger 112a ist vorzugweise fest mit dem Hauptmontagebereich 92a verbunden. Vorzugsweise ist der Träger 112a kraft-, form-, oder stoffschlüssig mit dem Hauptmontagebereich 92a des Montagerahmens 90a verbunden. Vorzugsweise ist der Täger 112a mit dem Hauptmontagebereich 92a des Montagerahmens 90a fest verschraubt. Grundsätzlich ist es auch denkbar, dass der Täger 112a einstückig mit dem Hauptmontagebereich 92a des Montagerahmens 90a ausgebildet ist. Der Träger 112a ist vorzugsweise dazu vorgesehen, einen Bereich zwischen den beiden Befestigungsschienen 34a, 36a der Flugzeugkabine 12a zu überbrücken. Der Träger 112a ist dazu vorgesehen, den Bereich zwischen den Befestigungsschienen 34a, 36a der Flugzeugkabine 12a zu überbrücken, sodass der Flugzeugsitz 42a, der im Wesentlichen oberhalb der einen Befestigungsschiene 34a angeordnet ist, über beide Befestigungsschienen 34a, 36a an den Kabinenboden 32a angebunden werden kann. Der Träger 112a weist vorzugsweise eine Länge von über 500 mm auf.

Das 16Ga-Modul 86a ist dazu vorgesehen, über drei Montagepunkte fest mit dem Kabinenboden 32a gekoppelt zu werden. Der Montagerahmen 90a weist drei Fittingelemente 114a, 116a, 118a auf. Die drei Fittingelemente 114a, 116a, 118a bilden jeweils einen Montagepunkt für das 16G-Modul 86a aus. Die Fittingelemente 114a, 116a, 118a sind zur Anbindung an eine der Befestigungsschienen 34a, 36a vorgesehen. Der Montagerahmen 90a ist über genau die drei Fittingelemente 114a, 116a, 118a mit den Befestigungsschienen 34a, 36a verbunden und damit auf dem Kabinenboden 32a montiert. In dem Hauptmontagebereich 92a sind zwei der Fittingelemente 114a, 116a angeordnet. Die zwei in dem Hauptmontagebereich 92a angeordneten Fittingelemente 114a, 116a sind zur Anbindung an dieselbe Befestigungsschiene 34a vorgesehen. In einem montierten Zustand sind die beiden Fittingelemente 114a, 116a in der Befestigungsschiene 34a fixiert. Die Fittingelemente 114a, 116a im Hauptmontagebereich 92a sind an dem Anbindungsträger 110a befestigt. Die Fittingelemente 114a, 116a sind jeweils an einem Ende des Anbindungsträgers 110a angebunden. Über die Fittingelemente 114a, 116a ist der Montagerahmen 90a mit seinem Hauptanbindungsbereich 92a an der einen Befestigungsschiene 34a montiert.

Das dritte Fittingelement 118a ist an dem sich von dem Hauptmontagebereich weg erstreckenden Träger 112a angebunden. Das dritte Fittingelement 118a zur Anbindung des Montagerahmens 90a ist an einem dem Hauptmontagebereich 92a entfernten Ende des Trägers 112a angebunden. Das dritte, an dem Träger 112a angebundene Fittingelement 118a ist zur Anbindung an die andere Befestigungsschiene 36a vorgehen. Das dritte, an dem Träger 112a angebundene Fittingelement 118a ist der anderen Befestigungsschiene 36a angeordnet als die Fittingelemente 114a, 116a des Hauptmontagebereichs. Über das dritte Fittingelement 118a ist der Montagerahmen 90a mit seinem sich von dem Hauptanbindungsbereich 92a weg erstreckenden Träger an der anderen Befestigungsschiene 36a montiert.

Das 9G-Modul 88a umfasst die Konsoleneinheit 64a. Das 9G-Modul 88a umfasst die Ottomane 68a. Die Konsoleneinheit 64a bildet mit seinem Auflageelement 72a, das den Fußablagebereich 70a ausbildet, mit seinem Bodenelement und dem Verstau- und Ablagebereich 74a einen Teil des 9G-Moduls 88a aus. Das 9G-Modul 88a umfasst das zweite Umhausungselement 62a der Umhausungseinheit 58a. Die Konsoleneinheit 64a mit der Ottomane 68a, und das zweite Umhausungselement 62a der Umhausungseinheit 58a sind in dem separat ausgebildeten 9G-Modul 88a zusammengefasst. Das 9G-Modul 88a umfasst die an dem zweiten Umhausungselement 62a der Umhausungseinheit 58a angebundene Konsoleneinheit 76a. Das 9G-Modul 88a umfasst die an dem zweiten Umhausungselement 62a der Umhausungseinheit 58a angebundene Monitoreinheit 80a. Die an dem zweiten Umhausungselement 62a angebundene Konsoleneinheit 76a bildet einen Teil des 9G-Moduls 88a aus. Die Monitoreinheit 80a bildet einen Teil des 9G-Moduls 88a aus. Die erste Konsoleneinheit 64a mit der Ottomane 68a, das zweite Umhausungselement 62a der Umhausungseinheit 58a mit der daran befestigten weiteren Konsoleneinheit 76a und der Monitoreinheit 80a sind zusammen zu dem separat ausgebildeten 9G-Modul 88a zusammengefasst. Grundsätzlich wäre es auch denkbar, dass das 9G-Modul 88a weitere Bauteile des Flugzeugsitzmoduls 10a umfasst. Das 9G-Modul 88a bildet eine Montagebaugruppe aus.

Das 9G-Modul 88a ist dazu vorgesehen, über drei Montagepunkte fest mit dem Kabinenboden 32a gekoppelt zu werden. Das 9G-Modul 88a weist drei voneinander beabstandet angeordnete Fittingelemente 120a, 122a, 124a auf. Die drei Fittingelemente 120a, 122a, 124a bilden jeweils einen Montagepunkt für das 9G-Modul 88a aus. Durch die drei Fittingelemente 120a, 122a, 124a ist das 9G-Modul 88a dazu vorgesehen, an den Kabinenboden 32a angebunden zu werden. Das 9G-Modul 88a umfasst einen Montagerahmen 140a. Der Montagerahmen 140a bildet einen Grundrahmen des 9G-Moduls 88a aus. Der Montagerahmen 140a weist einen ersten Träger 126a auf. Der erste Träger 126a ist als ein länglicher Träger ausgebildet. Der Montagerahmen 140a weist einen zweiten Träger 128a auf. Der zweite Träger 128a ist als ein länglicher Träger ausgebildet. Der Montagerahmen 140a weist zwei Querträger 144a, 146a auf, die die beiden ersten Träger 126a, 128a des Montagerahmens 140a miteinander verbinden. Die Träger 126a, 128a und die Querträger 144a, 146a sind jeweils starr miteinander verbunden, beispielsweise durch Schraubverbindungen. Grundsätzlich wäre es ebenso denkbar, dass die Träger 126a, 128a und die Querträger 144a, 146a stoffschlüssig miteinander verbunden sind. Der Montagerahmen 140a weist einen Hauptmontagebereich 142a auf. Die Träger 126a, 128a und die Querträger 144a, 146a bilden den Hauptmontagebereich 142a aus. In dem Hauptmontagebereich 142a ist zumindest die vordere Konsoleneinheit 64a und das zweite Umhausungselement 62a der Umhausungseinheit 58a montiert. Der Hauptmontagebereich 142a des Montagerahmens 140a ist zur Anbindung der Konsoleneinheit 64a vorgesehen. Die Konsoleneinheit 64a ist auf ihrer linken Seite mit ihrem Grundgestell fest auf dem Träger 126a des Montagerahmens 140a montiert.

Der Montagerahmen 140a des 9G-Moduls 88a weist einen weiteren Träger 148a auf, der sich von dem Hauptmontagebereich 142a weg erstreckt. Der sich von dem Hauptmontagebereich 142a des Montagerahmens 140a weg erstreckende Träger 148a erstreckt sich in Richtung des Flugzeugsitzes 42a. Der sich von dem Hauptmontagebereich 142a des Montagerahmens 140a weg erstreckende Träger 148a ist zur Anbindung des zweiten Umhausungselements 62a der Umhausungseinheit 58a und zur Kopplung mit der einen Befestigungsschiene 34a vorgesehen. Der sich von dem Hauptmontagebereich 142a des Montagerahmens 140a weg erstreckende Träger 148a kann dabei einen Teil des Montagerahmens 90a des 16G-Moduls 86a kreuzen. Der sich von dem Hauptmontagebereich 142a des Montagerahmens 140a weg erstreckende Träger 148a ist dabei nicht in Kontakt mit dem Montagerahmen 90a des 16G-Moduls 86a.

Das erste Fittingelement 120a ist dazu vorgesehen, in der Befestigungsschiene 34a fixiert zu werden. Das erste Fittingelement 120a ist an einem dem Hauptmontagebereich 142a des Montagerahmens 140a abgewandten Ende des sich von dem Hauptmontagebereich 142a des Montagerahmens 140a weg erstreckenden Trägers 148a angeordnet. Das erste Fittingelement 120a ist fest mit dem Träger 148a verbunden. Das erste Fittingelement 120a ist in einem Bereich neben dem Flugzeugsitz 42a angeordnet. Das erste Fittingelement 120a koppelt das zweite Umhausungselement 62a der Umhausungseinheit 58a in dem hinteren Teilbereich des zweiten Umhausungselements 62a über den Montagerahmen 140a mit der Befestigungsschiene 34a. Das zweite Fittingelement 122a ist dazu vorgesehen, das zweite Umhausungselement 62a der Umhausungseinheit 58a an den Kabinenboden 32a anzubinden. Das zweite Fittingelement 122a ist dazu vorgesehen, den Montagerahmen 140a in seinem Hauptmontagebereich 142a an den Kabinenboden 32a, insbesondere an die Befestigungsschiene 36a anzubinden. Das zweite Fittingelement 122a ist dazu vorgesehen, in der Befestigungsschiene 36a fixiert zu werden. Das zweite Fittingelement 122a ist in einem Bereich vor dem Flugzeugsitz 42a, insbesondere im Bereich zwischen dem Flugzeugsitz 42a und der vorderen Konsoleneinheit 64a angeordnet. Das zweite Fittingelement 122a ist mit dem Träger 126a des Montagerahmens 140a fest verbunden. Das Fittingelement 122a ist an einem ersten Ende des Trägers 126a befestigt. Über das Fittingelement 122a ist der Träger 126a des Montagerahmens 140a fest in der Befestigungsschiene 36a fixiert, also auf dem Kabinenboden 32a montiert. Der Träger 126a ist dazu vorgesehen, das zweite Umhausungselement 62a der Umhausungseinheit 58a mit der Befestigungsschiene 36a zu koppeln. Über den Träger 126a ist das zweite Umhausungselement 62a der Umhausungseinheit 58a auf dem Kabinenboden 32a befestigt. Das zweite Umhausungselement 62a der Umhausungseinheit 58a ist fest auf dem Träger 126a montiert.

Das dritte Fittingelement 124a ist dazu vorgesehen, die vordere Konsoleneinheit 64a an den Kabinenboden 32a anzubinden. Das dritte Fittingelement 124a ist dazu vorgesehen, in der Befestigungsschiene 36a fixiert zu werden. Das dritte Fittingelement 124a ist in einem Bereich vor dem Flugzeugsitz 42a, insbesondere in einem Bereich unter der vorderen Konsoleneinheit 64a angeordnet. Das dritte Fittingelement 124a koppelt den Montagerahmen 140a in seinem Hauptmontagebereich 142a mit der Befestigungsschiene 36a. Das dritte Fittingelement 124a ist mit dem Träger 128a fest verbunden. Das dritte Fittingelement 124a ist an einem ersten Ende des Trägers 128a befestigt. Über das dritte Fittingelement 124a ist der Träger 128a und damit der Montagerahmen 140a fest in der Befestigungsschiene 36a fixiert, also auf dem Kabinenboden 32a montiert.

Das 16Ga-Modul 86a und das 9G-Modul 88a sind dazu vorgesehen, getrennt voneinander an dem Kabinenboden 32a befestigt zu werden. Das 16Ga-Modul 86a ist über seine drei Fittingelemente 114a, 116a, 118a getrennt von dem 9G-Modul 88a, das über seine drei Fittingelemente 120a, 122a, 124a an den Befestigungsschienen 34a, 36a des Kabinenbodens 32a befestigt ist, an dem Kabinenboden 32a befestigt. Zwei Fittingelemente 114a, 116a des 16G-Moduls 86a und zwei Fittingelemente 122a, 124a des 9G-Moduls 88a sind jeweils mit derselben Befestigungsschiene 34a, 36a verbunden. Das andere Fittingelement 118a des 16G-Moduls 86a und das andere Fittingelement 120a des 9G-Moduls 88a sind jeweils mit der anderen Befestigungsschiene 34a, 36a verbunden. Das 16Ga-Modul 86a ist mit seinen beiden Fittingelementen 114a, 116a an derselben Befestigungsschiene 34a fixiert, an der das 9G-Modul 88a mit seinem einen Fittingelement 120a fixiert ist. Das 9G-Modul 88a ist mit seinen beiden Fittingelementen 122a, 124a an derselben Befestigungsschiene 36a fixiert, an der das 16G-Modul 86a mit seinem einen Fittingelement 118a fixiert ist. Das 16Ga-Modul 86a ist über seine drei Fittingelemente 114a, 116a, 118a mit beiden Befestigungsschienen 34a, 36a verbunden. Das 9G-Modul 88a ist über seine drei Fittingelemente 120a, 122a, 124a mit beiden Befestigungsschienen 34a, 36a verbunden. Das 16Ga-Modul 86a und das 9G-Modul 88a sind über ihre jeweiligen Fittingelemente 114a, 116a, 118a, 120a, 122a, 124a separat voneinander mit den Befestigungsschienen 34a, 36a verbunden. Das 16Ga-Modul 86a und das 9G-Modul 88a sind über ihre jeweiligen Fittingelemente 114a, 116a, 118a, 120a, 122a, 124a unabhängig und insbesondere getrennt voneinander an den Befestigungsschienen 34a, 36a befestigt.

Das 16Ga-Modul 86a und das 9G-Modul 88a sind frei von einer direkten Verbindung ausgebildet. Das 16Ga-Modul 86a und das 9G-Modul 88a sind nicht direkt miteinander verbunden. Das 16Ga-Modul 86a und das 9G-Modul 88a weisen keine kraftübertragende Verbindung zwischen einander auf. Zwischen den als Montagemodulen ausgebildeten Modulen 86a, 88a gibt es keine direkte Verbindung. In einem Bereich, in dem das erste Umhausungselement 60a der Umhausungseinheit 58a, das Teil des 9G-Moduls 88a ist, und das zweite Umhausungselement 62a der Umhausungseinheit 58a, das Teil des 16G-Moduls 86a ist, aufeinandertreffen, ist ein Spalt vorhanden, sodass die beiden Umhausungselemente 60a, 62a keinen direkten Kontakt haben. Das erste Umhausungselement 60a der Umhausungseinheit 58a, das Teil des 9G-Moduls 88a ist, und das zweite Umhausungselement 62a der Umhausungseinheit 58a, das Teil des 16G-Moduls 86a ist, sind nicht direkt miteinander verbunden. Der Spalt zwischen dem ersten Umhausungselement 60a der Umhausungseinheit 58a, das Teil des 9G-Moduls 88a ist, und dem zweiten Umhausungselement 62a der Umhausungseinheit 58a, das Teil des 16G-Moduls 86a ist, ist größer als ein Maß, um das sich das Umhausungselement 60a der Umhausungseinheit 58a, das Teil des 9G-Moduls 88a ist, bei einem 9G-Crashtest verformt. Der Spalt zwischen dem ersten Umhausungselement 60a und dem zweiten Umhausungselement 62a ist durch ein Zwischenelement 130a überbrückt. Das Zwischenelement 130a ist als ein elastisches Element ausgebildet. Das Zwischenelement 130a ist vorzugsweise als eine Gummidichtlippe ausgebildet. Das Zwischenelement 130a verschließt den Spalt zwischen den beiden Umhausungselementen 60a, 62a der Umhausungseinheit 58a vorzugsweise vollständig. Das Zwischenelement 130a ist vorzugsweise lediglich mit einem der Umhausungselemente 60a, 62a der Umhausungseinheit 58a fest verbunden. An dem anderen Umhausungselement 60a, 62a steht das elastische Zwischenelement 130a vorzugsweise lediglich an. Über das Zwischenelement 130a kann keine Kraft zwischen den Umhausungselementen 60a, 62a übertragen werden. Grundsätzlich ist es auch denkbar, dass die beiden Umhausungselemente 60a, 62a der Umhausungseinheit 58a einen Überlappungsbereich aufweisen, in dem sich die beiden Umhausungselemente 60a, 62a überlappen. Dabei wären die Umhausungselemente 60a, 62a in dem Überlappungsbereich nicht miteinander verbunden. Die Umhausungselemente 60a, 62a könnten in dem Überlappungsbereich aufeinander abgleiten.

Das Flugzeugsitzmodul 10a ist für einen auf dem Flugzeugsitz 42a sitzenden Passagier besonders vorteilhaft sicher ausgebildet. Eine vor dem Flugzeugsitz 42a angeordnete Wandung des Flugzeugsitzbereichs 26a ist von einer zweiten Umhausungseinheit 154a des vor dem Flugzeugsitzmodul 10a angeordneten Flugzeugsitzmoduls ausgebildet. Die zweite Umhausungseinheit 154a ist gleich ausgebildet wie die zweite Umhausungseinheit 62a des beschriebenen Flugzeugsitzmoduls 10a. Die Umhausungseinheit 154a bildet in einem hinteren Bereich 150a neben dem Flugzeugsitz 42a eine Fläche aus, die im Wesentlichen orthogonal zu der Flugzeugkabinenmittelachse 18a ausgerichtet ist. Der hintere Bereich 150a ist als ein dem Mittelgang 20a zugewandter Bereich der Umhausungseinheit 154a ausgebildet. Der hintere Bereich 150a bildet einen möglichen Kopfaufschlagbereich für einen Passagier oder Crashtestdummy bei einem Crash oder Crashtest aus. Der hintere Bereich 150a befindet sich unmittelbar in Verzögerungsrichtung des Flugzeugsitzes 42a. Durch die Dreipunktgurteinheit 132a kann vorteilhaft ein Aufschlagen eines Kopfes eines Passagiers oder Crashtestdummys bei einem Crash oder Crashtest vorteilhaft abgemildert oder verhindert werden. Der hintere Bereich 150a kann zusätzlich als ein gepolsterter Bereich ausgebildet sein, um einen möglichen Aufprall zu dämpfen. Die Ausrichtung des hinteren Bereichs 150a relativ zu dem Flugzeugsitz 42a ist durch die Schrägstellung des Flugzeugsitzes 42a um den Winkel α besonders vorteilhaft.

Die Umhausungseinheit 154a bildet in einem vorderen Bereich 152a vor dem Flugzeugsitz 42a eine Fläche aus, die schräg zu der Flugzeugkabinenmittelachse 18a ausgerichtet ist. Der vordere Bereich 152a bildet einen Beinabstützbereich aus. Der vordere Bereich 152a ist zu dem hinteren Bereich 150a verkippt. Der vordere Bereich 152a ist dazu vorgesehen, dass sich die Beine eines auf dem Flugzeugsitz 42a sitzenden Passagiers oder Crashtestdummys in einem Crash oder bei einem Crashtest an dem vorderen Bereich 152a abstützen können. Die Beine eines auf dem Flugzeugsitz 42a sitzenden Passagiers oder Crashtestdummys treffen bei einem Crash oder Crashtest durch die wirkenden Beschleunigungen in dem als Beinabstützbereich ausgebildeten vorderen Bereich 152a auf. Dadurch kann ein Verdrehen des Passagiers verhindert werden. Dadurch kann auch ein Verdrehen des Torsos des Passagiers oder Crashtestdummys verringert werden. Dadurch können besonders vorteilhafte Crashtestergebnisse erzielt und ein besonders sicheres Flugzeugsitzmodul 10a bereitgestellt werden. Vorteilhaft könnte dadurch auch auf zusätzliche Sicherungssysteme, wie beispielsweise einen Airbag oder ähnliches verzichtet werden.

Vorzugsweise ist vor dem vordersten Flugzeugsitzmodul der Flugzeugsitzanordnung 22a ein Nutzbereich 158a angeordnet. Der Nutzbereich 158a ist zwischen einer Bordquerwand 160a, die einen Teil der Flugzeugkabine 12a, in dem die Flugzeugsitzanordnungen 22a, 24a angeordnet sind, abtrennt und dem vordersten Flugzeugsitzmodul angeordnet. Die Flugzeugsitzanordnung 22a weist ein vorderes Umhausungselement 162a auf. Das vordere Umhausungselement 162a ist im Wesentlichen gleich ausgebildet wie die zweiten Umhausungselemente 62a der Umhausungseinheiten 58a der Flugzeugsitzmodule 10a, 28a. Das vordere Umhausungselement 162a begrenzt den Flugzeugsitzbereich des vordersten Flugzeugsitzmoduls der Flugzeugsitzanordnung 22a nach vorne. In dem Nutzbereich 158a zwischen der Bordquerwand 160a und dem vorderen Umhausungselement 162a ist ein Verstaubereich 164a angeordnet. Der Verstaubereich 164a weist vorzugsweise mehrere Verstaufächer auf, die zur Verstauung von Gegenständen vorgesehen sind. Beispielsweise kann der Verstaubereich 164a auch zur Verstauung von Utensilien einer Flugzeugcrew vorgesehen sein. Vorzugsweise kann der Verstaubereich 164a zur Verstauung von Handgepäck vorgesehen sein. Vorzugsweise kann der Verstaubereich 164a dem vorderen Flugzeugsitzmodul der Flugzeugsitzanordnung 22a zugesprochen werden. Vorzugsweise kann der Nutzbereich 158a auch zur Erweiterung des vordersten Flugzeugsitzmoduls der Flugzeugsitzanordnung 22a vorgesehen sein. Beispielsweise könnte der Nutzbereich 158a zumindest teilweise zur Erweiterung des Flugzeugsitzbereichs genutzt werden, in dem das vordere Umhausungselement 162a verstell- oder entfernbar ausgebildet ist.

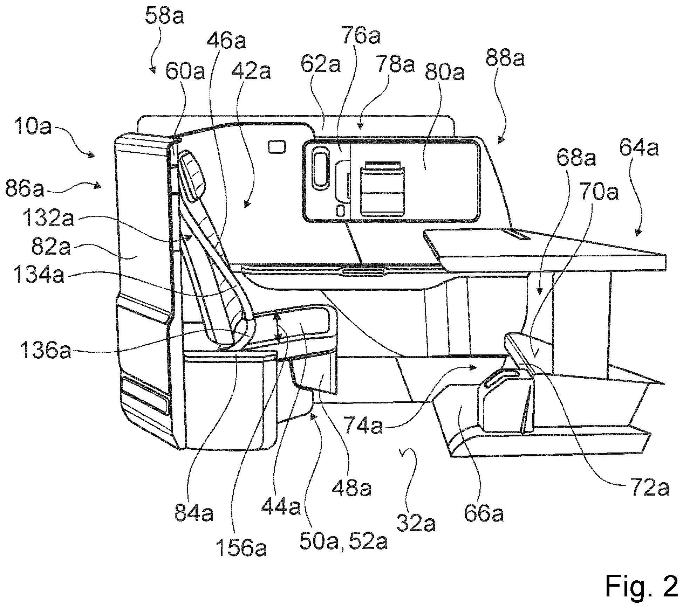

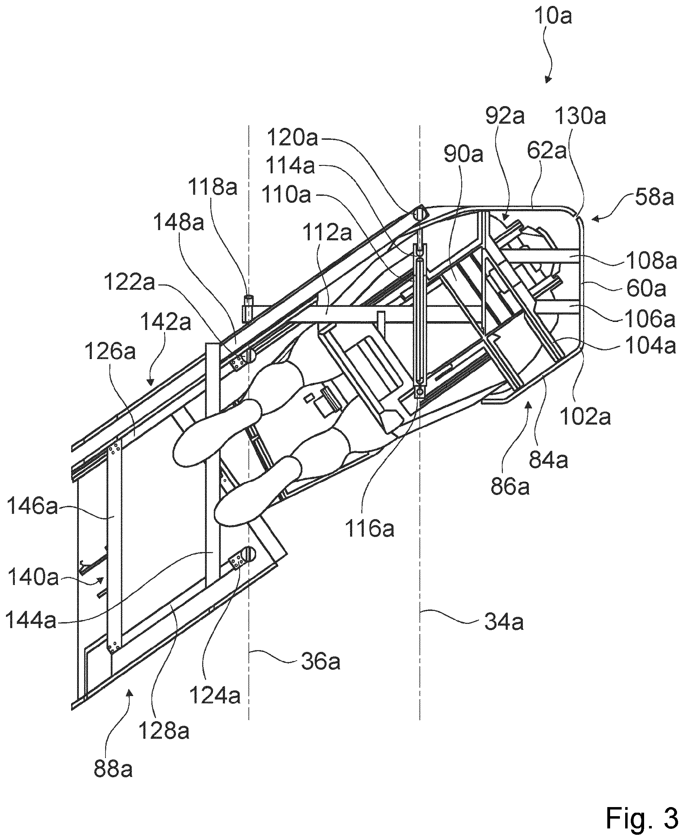

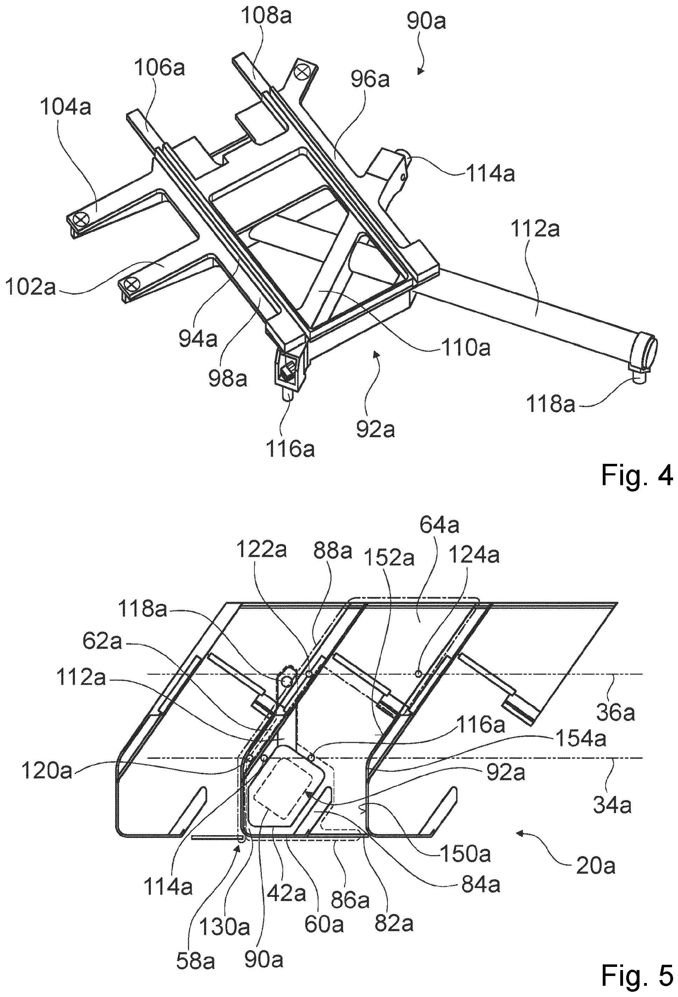

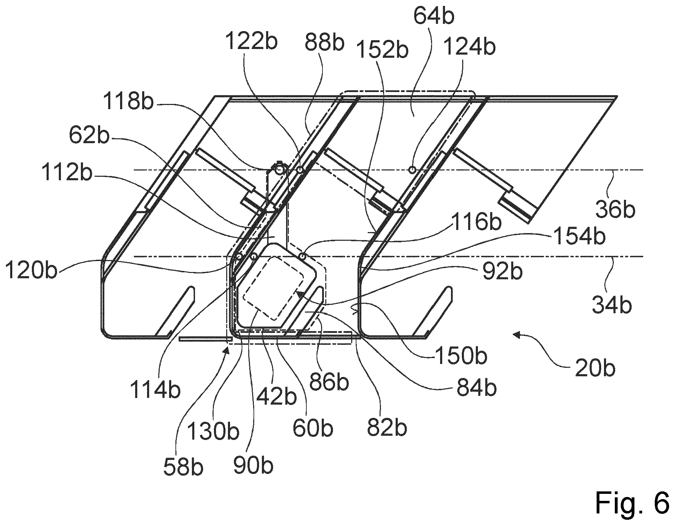

In der Fig. 6 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 5 verwiesen werden kann. Zur Unterscheidung der Ausführungsbeispiele ist der Buchstabe a den Bezugszeichen des Ausführungsbeispiels in Fig. 1 bis 5 nachgestellt. In dem Ausführungsbeispiel der Fig. 6 ist der Buchstabe a durch den Buchstaben b ersetzt.

Die Figur 1 zeigt einen Teil einer erfindungsgemäßen Flugzeugkabine 12b mit einer erfindungsgemäßen Flugzeugsitzanordnung 22b. Die Flugzeugsitzanordnung 22b umfasst ein erstes Flugzeugsitzmodul 10b. Das erste Flugzeugsitzmodul 10b begrenzt einen Flugzeugsitzbereich 26b. Die Flugzeugsitzanordnung 22b umfasst ein zweites Flugzeugsitzmodul 28b. Das zweite Flugzeugsitzmodul 28b begrenzt einen weiteren Flugzeugsitzbereich 30b. Das Flugzeugsitzmodul 10b weist einen Flugzeugsitz 42b auf. Der Flugzeugsitz 42b ist als ein Full-Flat-Sitz ausgebildet. Der Flugzeugsitz 42b kann zwischen einer TTL-Sitzstellung, also einer aufrechten Sitzstellung und einer Liegestellung verstellt werden. In der Liegestellung bildet der Flugzeugsitz 42b eine im Wesentlichen ebene Liegefläche aus. Der Flugzeugsitz 42b ist dazu vorgesehen, in einem Winkel α von über 30 bis 80 Grad in der Flugzeugkabine 12b montiert zu werden. In dem gezeigten Ausführungsbeispiel ist der Flugzeugsitz 42b in einem Winkel α von 55 Grad in der Flugzeugkabine 12b montiert.

Das Flugzeugsitzmodul 10b umfasst eine Umhausungseinheit 58b. Die Umhausungseinheit 58b ist dazu vorgesehen, den Flugzeugsitzbereich 26b des ersten Flugzeugsitzmoduls 10b zumindest teilweise zu begrenzen. Die Umhausungseinheit 58b begrenzt den Flugzeugsitzbereich 26b des Flugzeugsitzmoduls 10b in einem Bereich des Flugzeugsitzes 42b. Die Umhausungseinheit 58b begrenzt den Flugzeugsitzbereich 26b in einem Bereich hinter dem Flugzeugsitz 42b. Die Umhausungseinheit 58b begrenzt den Flugzeugsitzbereich 26b in einem Bereich seitlich und vor dem Flugzeugsitz 42b. Die Umhausungseinheit 58b weist ein erstes Umhausungselement 60b auf. Das erste Umhausungselement 60b ist dazu vorgesehen, den Flugzeugsitzbereich 26b des Flugzeugsitzmoduls 10b zumindest teilweise zu begrenzen. Die Umhausungseinheit 58b weist ein zweites Umhausungselement 62b auf. Das zweite Umhausungselement 62b ist dazu vorgesehen, den Flugzeugsitzbereich 26b des Flugzeugsitzmoduls 10b zumindest teilweise zu begrenzen. Das zweite Umhausungselement 62b begrenzt den Flugzeugsitzbereich 26b des Flugzeugsitzmoduls 10b in einem Bereich seitlich des Flugzeugsitzes 42b.

Das Flugzeugsitzmodul 10b weist eine Konsoleneinheit 64b auf. Die Konsoleneinheit 64b ist frontal vor dem Flugzeugsitz 42b angeordnet. Die Konsoleneinheit 64b ist an der Umhausungseinheit 58b des Flugzeugsitzmoduls 10b angebunden. Die Konsoleneinheit 64b ist an dem zweiten Umhausungselement 62b der Umhausungseinheit 58b montiert. Das Flugzeugsitzmodul 10b weist eine zweite Konsoleneinheit 76b auf. Die Konsoleneinheit 76b ist an einer Innenseite der Umhausungseinheit 58b des Flugzeugsitzmoduls 10b, an dem zweiten Umhausungselement 62b angebracht. Die Konsoleneinheit 76b ist in einem Bereich vor dem Flugzeugsitz 42b angeordnet. Das Flugzeugsitzmodul 10b kann ein Türelement 82b aufweisen. Das Türelement 82b ist verschiebbar an dem ersten Umhausungselement 60b der Umhausungseinheit 58b angeordnet. Das Flugzeugsitzmodul 10b weist ein erstes Armlehnenelement 84b auf. Das erste Armlehnenelement 84b ist seitlich des Flugzeugsitzes 42b angeordnet.

Das Flugzeugsitzmodul 10b ist von zwei separat ausgebildeten Modulen 86b, 88b zusammengesetzt. Das Flugzeugsitzmodul 10b ist von einem 16G-Modul 86b und einem 9G-Modul 88b gebildet. Das 16G-Modul 86b und das 9G-Modul 88b sind separat voneinander ausgebildet. Mehrere Bauteile des Flugzeugsitzmoduls 10b bilden jeweils das 9G-Modul 88b bzw. das 16G-Modul 86b aus. Im Unterschied zu dem ersten Ausführungsbeispiel der Figuren 1 - 5 ist das erste Umhausungselement 60b der Umhausungseinheit 58b als ein Teil des 9G-Moduls 88b ausgebildet. Das erste Umhausungselement 60b der Umhausungseinheit 58b ist über einen Montagerahmen 140b des 9G-Moduls 88b auf einem Kabinenboden 32b der Flugzeugkabine 12montiert. Die beiden Umhausungselemente 60b, 62b der Umhausungseinheit 58b können im Gegensatz zu dem ersten Ausführungsbeispiel fest miteinander verbunden sein. So ist es grundsätzlich denkbar, dass die beiden Umhausungselemente 60b, 62b der Umhausungseinheit 58b fest miteinander verschraubt sind, oder dass die Umhausungselemente 60b, 62b einstückig miteinander ausgebildet sind. Ferner ist das Türelement 82b, das mit dem ersten Umhausungselement 60b verbunden ist, als ein Teil des 9G-Moduls 88b ausgebildet. Durch die Zuordnung des Türelements 82b und des erstens Umhausungselements 60b zu dem 9G-Modul 88b können das Türelement 82b und das erste Umhausungselement 60b besonders leicht ausgebildet werden, da sie weniger hohe Kräfte aushalten müssen. Das 16Gb-Modul 86b umfasst den Flugzeugsitz 42b und lediglich das Armlehnenelement 84b. Grundsätzlich wäre es auch denkbar, dass auch noch das Armlehnenelement 84b dem 9G-Modul 88b zugeordnet wird.

Grundsätzlich wäre es ebenso denkbar, dass die Flugzeugkabine 12b neben den Befestigungsschienen 34b, 36b auf einer dem Mittelgang 20b zugewandten Seite der Befestigungsschiene 34b weitere Befestigungspunkte aufweist, über die, insbesondere das 9G-Modul 88b zusätzlich mit dem Kabinenboden 32b gekoppelt werden kann. Die zusätzlichen Befestigungspunkte könnten als einzelne Befestigungsstellen ausgebildet sein, die in regelmäßigen Abständen einzeln in den Kabinenboden 32b eingelassen sein könnten. Die zusätzlichen Befestigungspunkte könnten vorzugsweise in einem Bereich angeordnet sein, der in einem montierten Zustand der Flugzeugsitzmodule 10b, 28b unterhalb des dem Mittelgang 20b zugewandten Umhausungselemente 60b angeordnet. Durch die zusätzlichen Befestigungspunkte könnte das Flugzeugsitzmodul 10b, insbesondere das 9G-Modul 88b des Flugzeugsitzmoduls 10b vorteilhaft zusätzlich in einem von den Befestigungsschienen 34b, 36b entfernten Bereich mit dem Kabinenboden verbunden werden. Dadurch könnte das 9G-Modul 88b, insbesondere eine Lasttragende Grundstruktur des 9G-Moduls, wie insbesondere ein Montagerahmen oder die Umhausungseinheit 58b strukturell weniger steif und stabil ausgebildet werden, da Kräfte zusätzlich über die weiteren Befestigungspunkte in den Kabinenboden 32a abgeleitet werden könnten. Dadurch könnte das 9G-Modul und dadurch das gesamte Flugzeugsitzmodul 10b besonderes leicht ausgebildet werden.

**Bezugszeichen**

| | | | |
|---|---|---|---|
| 10 | Flugzeugsitzmodul | 68 | Ottomane |
| 12 | Flugzeugkabine | 70 | Fußablagebereich |
| 14 | Bordwand | 72 | Auflageelement |
| 16 | Bordwand | 74 | Stau- und/oder Ablagebereich |
| 18 | Flugzeugkabinenmittelachse | 76 | Konsoleneinheit |
| 20 | Mittelgang | 78 | Verstaumöglichkeit |
| 22 | Flugzeugsitzanordnung | 80 | Monitoreinheit |
| 24 | Flugzeugsitzanordnung | 82 | Türelement |
| 26 | Flugzeugsitzbereich | 84 | Armlehnenelement |
| 28 | Flugzeugsitzmodul | 86 | 16G-Modul |
| 30 | Flugzeugsitzbereich | 88 | 9G-Modul |
| 32 | Kabinenboden | 90 | Montagerahmen |
| 34 | Befestigungsschiene | 92 | Hauptmontagebereich |
| 36 | Befestigungsschiene | 94 | Führungsschiene |
| 38 | Befestigungsschiene | 96 | Führungsschiene |
| 40 | Befestigungsschiene | 98 | Träger |
| 42 | Flugzeugsitz | 100 | Träger |
| 44 | Sitzboden | 102 | Haltesteg |
| 46 | Rückenlehne | 104 | Haltesteg |
| 48 | Beinstützelement | 106 | Haltesteg |
| 50 | Grundgestell | 108 | Haltesteg |
| 52 | Kinematikeinheit | 110 | Anbindungsträger |
| 54 | Mittelachse | 112 | Träger |
| 56 | Sitzrichtung | 114 | Fittingelement |
| 58 | Umhausungseinheit | 116 | Fittingelement |
| 60 | Umhausungselement | 118 | Fittingelement |
| 62 | Umhausungselement | 120 | Fittingelement |
| 64 | Konsoleneinheit | 122 | Fittingelement |
| 66 | Bodenelement | 124 | Fittingelement |
| 126 | Träger | 152 | Vorderer Bereich |
| 128 | Träger | 154 | Umhausungseinheit |
| 130 | Zwischenelement | 156 | Sitzbreite |
| 132 | Dreipunktgurteinheit | 158 | Nutzbereich |
| 134 | Schultergurt | 160 | Bordquerwand |
| 136 | Beckengurt | 162 | Umhausungselement |
| | | 164 | Verstaubereich |
| 140 | Montagerahmen | | |
| 142 | Hauptmontagebereich | X | Sitzabstand |
| 144 | Querträger | | |
| 146 | Querträger | | |
| 148 | Träger | | |
| 150 | Hinterer Bereich | | |

## Patentansprüche

1. Flugzeugsitzmodul, das einen Flugzeugsitzbereich (26, 30) ausbildet, mit einem Flugzeugsitz (42), der dazu vorgesehen ist, in einem Winkel α von 30 bis 80 Grad, vorzugsweise 45 bis 65 Grad in einer Flugzeugkabine (12) montiert zu werden, und der zumindest ein Grundgestell (50) und eine Kinematikeinheit (52) aufweist, mit einer Umhausungseinheit (58), die ein erstes Umhausungselement (60), das den Flugzeugsitzbereich (26) im Bereich des Flugzeugsitzes (42) zumindest teilweise begrenzt, und ein zweites Umhausungselement (62), das den Flugzeugsitzbereich (26) zumindest in einem Bereich vor dem Flugzeugsitz (42) teilweise begrenzt, umfasst, mit einer Ottomane (68), die einen Fußablagebereich (70) bereitstellt, und mit einer Konsoleneinheit (64), die zumindest einen Stau- und/oder Ablagebereich (74) des Flugzeugsitzbereichs (26) ausbildet, **wobei** der Flugzeugsitz (42) in einem separat ausgebildeten 16-G-Modul (86) und das zweite Umhausungselement (62), die Ottomane (68) und die Konsoleneinheit (64) in einem separat ausgebildeten 9G-Modul (88) zusammengefasst sind, wobei das 16G-Modul (86) und das 9G-Modul (88) dazu vorgesehen sind, getrennt voneinander an einem Kabinenboden (32) befestigt zu werden, **dadurch gekennzeichnet, dass**
das 16G-Modul (86) einen Montagerahmen (90) aufweist, der zur Anbindung an den Kabinenboden (32) vorgesehen ist und dazu drei Fittingelemente (114, 116, 118) umfasst, die jeweils zur Anbindung an eine Befestigungsschiene (34, 36, 38, 40) vorgesehen sind,
wobei der Montagerahmen (90) einen Hauptmontagebereich (92) und einen sich von dem Hauptmontagebereich (92) weg erstreckenden Träger (112) aufweist, wobei in dem Hauptmontagebereich (92) der Flugzeugsitz (42) angebunden ist, wobei an einem dem Hauptmontagebereich (92) entfernten Ende des Trägers (112) eines der Fittingelemente (118) angebunden ist,
wobei in dem Hauptmontagebereich (92) des Montagerahmens (90) zwei der Fittingelemente (114, 116) angeordnet sind, die zur Anbindung an dieselbe Befestigungsschiene (34) vorgesehen sind,
wobei die beiden in dem Hauptmontagebereich (92) angebrachten Fittingelemente (114, 116) im montierten Zustand in unterschiedlichen Positionen in derselben Befestigungsschiene (34, 36, 38, 40) fixiert sind.

2. Flugzeugsitzmodul nach Anspruch 1, **dadurch gekennzeichnet, dass** das erste Umhausungselement (60) ein Teil des separat ausgebildeten 16G-Moduls (86) ausbildet.

3. Flugzeugsitzmodul nach Anspruch 1 oder 2, **dadurch gekennzeichnet, dass** das 16G-Modul (86) und/oder das 9G-Modul (88) jeweils dazu vorgesehen ist, über drei Montagepunkte fest mit dem Kabinenboden (32) gekoppelt zu sein.

4. Flugzeugsitzmodul nach einem der vorhergehenden Ansprüche, **gekennzeichnet durch** ein Türelement (82), das verschiebbar mit dem ersten Umhausungselement (60) verbunden ist und einen Teil des 16G-Moduls (86) ausbildet.

5. Flugzeugsitzmodul nach einem der vorhergehenden Ansprüche, **gekennzeichnet durch** ein Armlehnenelement (84), das verschiebbar an dem ersten Umhausungselement (60) angebunden ist und einen Teil des 16G-Moduls (86) ausbildet.

6. Flugzeugsitzmodul nach Anspruch 1, **dadurch gekennzeichnet, dass** das erste Umhausungselement (60) ein Teil des separat ausgebildeten 9G-Moduls (88) ausbildet.

7. Flugzeugsitzmodul nach einem der vorhergehenden Ansprüche, **dadurch gekennzeichnet, dass** das 16G-Modul (86) und das 9G-Modul (88) frei von einer direkten festen Verbindung ausgebildet sind.

8. Flugzeugsitzmodul nach einem der vorhergehenden Ansprüche, **dadurch gekennzeichnet, dass** ein Bereich zwischen der Ottomane (68) und dem Flugzeugsitz (42) zumindest teilweise frei von einem Podest ausgebildet ist.

9. Flugzeugkabine mit einem einzelnen Mittelgang (20) und zumindest einer Flugzeugsitzanordnung (22) mit mehreren Flugzeugsitzmodulen (10, 28), nach einem der Ansprüche 1 bis 8, die zwischen dem Mittelgang (20) und einer ersten Bordwand (14) angeordnet ist, und mit einer zweiten Flugzeugsitzanordnung (24) mit mehreren Flugzeugsitzmodulen (10, 28), die zwischen dem Mittelgang (20) und einer zweiten Bordwand (16) angeordnet ist.

10. Flugzeugkabine nach Anspruch 9, **dadurch gekennzeichnet, dass** die Flugzeugsitzmodule (10, 28) der Flugzeugsitzanordnung (22) einen Sitzabstand (X) von 838 mm (33 Zoll) bis 1016 mm (40 Zoll) aufweisen und jeweils einen Flugzeugsitz aufweisen, der in einem Winkel α von 30 bis 80 Grad, vorzugsweise 45 bis 65 Grad zu einer Flugzeugkabinenmittelachse (18) montiert ist.

## Claims

1. Aircraft seat module which forms an aircraft seat region (26, 30),
with an aircraft seat (42) configured to be mounted in an aircraft cabin (12) at an angle α of 30 degrees to 80 degrees, preferably 45 degrees to 65 degrees, and comprising at least a base frame (50) and a cinematics unit (52),
with an enclosure unit (58) comprising a first enclosure element (60), which delimits the aircraft seat region (26) at least partially in the region of the aircraft seat (42), and a second enclosure element (62), which delimits the aircraft seat region (26) partially at least in a region in front of the aircraft seat (42),
with an ottoman (68) providing a footrest region (70), and
with a console unit (64) that forms at least one stowage and/or depositing region (74) of the aircraft seat region (26),
wherein the aircraft seat (42) is combined in a separately realized 16G module (86) and the second enclosure element (62), the ottoman (68) and the console unit (64) are combined in a separately realized 9G module (88),
wherein the 16G module (86) and the 9G module (88) are configured to be fastened to a cabin floor (32) separately from each other,
**characterized in that** the 16G module (86) has an assembly frame (90), which is configured for a connection to the cabin floor (32) and for this purpose comprises three fitting elements (114, 116, 118), each of which is configured for a connection to a fastening rail (34, 36, 38, 40),
wherein the mounting frame (90) comprises a main assembly region (92) and a beam (112) that extends away from the main assembly region (92), the aircraft seat (42) being connected in the main assembly region (92),
wherein one of the fitting elements (118) is connected to an end of the beam (112) that is distant from the main assembly region (92),
wherein two of the fitting elements (114, 116), which are configured for a connection to the same fastening rail (34), are arranged in the main assembly region (92) of the assembly frame (90),
wherein the two fitting elements (114, 116) that are attached in the main assembly region (92) are in the mounted state fixed in the same guide rail (34, 36, 38, 40) in different positions.

2. Aircraft seat module according to claim 1,
**characterized in that** the first enclosure element (60) forms part of the separately realized 16G module (86).

3. Aircraft seat module according to claim 1 or 2,
**characterized in that** the 16G module (86) and/or the 9G module (88) are/is in each case configured to be fixedly coupled with the cabin floor (32) via three mounting points.

4. Aircraft seat module according to one of the preceding claims,
**characterized by** a door element (82), which is displaceably connected with the first enclosure element (60) and forms part of the 16G module (86).

5. Aircraft seat module according to one of the preceding claims, **characterized by** an armrest element (84), which is displaceably connected with the first enclosure element (60) and forms part of the 16G module (86).

6. Aircraft seat module according to claim 1,
**characterized in that** the first enclosure element (60) forms part of the separately realized 9G module (88).

7. Aircraft seat module according to one of the preceding claims,
**characterized in that** the 16G module (86) and the 9G module (88) are realized free of a direct fixed connection.

8. Aircraft seat module according to one of the preceding claims,
**characterized in that** a region between the ottoman (68) and the aircraft seat (42) is realized at least partly free of a pedestal.

9. Aircraft cabin
with a single central aisle (20) and
with at least one aircraft seat arrangement (22) with several aircraft seat modules (10, 28) according to one of claims 1 to 8, which is arranged between the central aisle (20) and a first side panel (14), and
with a second aircraft seat arrangement (24) with several aircraft seat modules (10, 28), which is arranged between the central aisle (20) and a second side panel (16).

10. Aircraft cabin according to claim 9,
**characterized in that** the aircraft seat modules (10, 28) of the aircraft seat arrangement (24) have a seat distance (X) in a range from 838 mm (33 inches) to 1016 mm (40 inches) and in each case comprise an aircraft seat (42) mounted at an angle α of 30 degrees to 80 degrees, preferably 45 degrees to 65 degrees, relative to an aircraft cabin middle axis (18).

## Revendications

1. Module de siège d'avion qui forme une zone de siège d'avion (26, 30), avec un siège d'avion (42) prévu pour être monté dans une cabine d'avion (12) selon un angle α de 30 à 80 degrés, de préférence de 45 à 65 degrés, et comprenant au moins un cadre de base (50) et une unité cinématique (52), avec une unité de clôture (58) comprenant un premier élément de clôture (60) qui délimite au moins partiellement la zone de siège d'avion (26) dans la zone du siège d'avion (42) et comprenant un deuxième élément de clôture (62) qui délimite partiellement la zone de siège d'avion (26) au moins dans une zone devant le siège d'avion (42),
avec une ottomane (68) qui fournit une zone de repose-pieds (70) et
avec une unité de console (64) qui forme au moins une zone de rangement et/ou de dépose (74) de la zone de siège d'avion (26),
où le siège d'avion (42) est réalisé séparément dans un module 16G (86) et le deuxième élément de clôture (62), l'ottomane (68) et l'unité de console (64) sont combinés dans un module 9G (88) qui est réalisé séparément, le module 16G (86) et le module 9G (88) étant prévus pour être fixés séparément l'un de l'autre à un plancher de cabine (32),
**caractérisé en ce que**
le module 16G (86) comprend un cadre de montage (90) prévu pour la liaison au plancher de cabine (32) et à cet effet comprend trois éléments de raccord (114, 116, 118) prévus chacun pour la liaison à un rail de fixement (34, 36, 38, 40), où le cadre de montage (90) comprend une zone de montage principale (92) et un support (112) qui s'étend à partir de la zone de montage principale (92), où le siège d'avion (42) est relié dans la zone de montage principale (92), où un des éléments de raccord (118) est relié à une extrémité du support (112) éloignée de la zone de montage principale (92),
où deux des éléments de raccord (114, 116), prévus pour être reliés au même rail de fixement (34), sont disposés dans la zone de montage principale (92) du cadre de montage (90),
où les deux éléments de raccord (114, 116) montés dans la zone de montage principale (92) sont en état monté fixés dans différentes positions dans le même rail de guidage (94, 96).

2. Module de siège d'avion selon la revendication 1,
**caractérisé en ce que** le premier élément de clôture (60) forme une partie du module 16G (86) qui est réalisé séparément.

3. Module de siège d'avion selon la revendication 1 ou 2,
**caractérisé en ce que** le module 16G (86) et/ou le module 9G (88) sont respectivement prévus pour être couplés fixement au plancher de cabine (32) par trois points de montage.

4. Module de siège d'avion selon l'une des revendications précédentes,
**caractérisé par** un élément de portière (82) qui est relié déplaçablement au premier élément de clôture (60) et qui forme une partie du module 16G (86).

5. Module de siège d'avion selon l'une des revendications précédentes,
**caractérisé par** un élément d'appuie-bras (84) qui est relié déplaçablement au premier élément de clôture (60) et qui forme une partie du module 16G (86).

6. Module de siège d'avion selon la revendication 1,
**caractérisé en ce que** le premier élément de clôture (60) forme une partie du module 9G (88) qui est réalisé séparément.

7. Module de siège d'avion selon l'une des revendications précédentes,
**caractérisé en ce que** le module 16G (86) et le module 9G (88) sont réalisés sans liaison fixe directe.

8. Module de siège d'avion selon l'une des revendications précédentes,
**caractérisé en ce qu'**une zone entre l'ottomane (68) et le siège d'avion (42) est réalisée au moins partiellement sans piédestal.

9. Cabine d'avion
avec une seule allée centrale (20) et
au moins un agencement de siège d'avion (22) avec plusieurs modules de siège d'avion (10, 28) selon l'une des revendications 1 à 8, disposé entre l'allée centrale (20) et une première paroi de bord (14), et
avec un deuxième agencement de siège d'avion (24) avec plusieurs modules de siège d'avion (10, 28), disposé entre l'allée centrale (20) et une deuxième paroi de bord (16).

10. Cabine d'avion selon la revendication 9,
**caractérisée en ce que** les modules de siège d'avion (10, 28) de l'agencement de siège d'avion (22) présentent une distance de siège (X) de 838 mm (33 pouces) à 1016 mm (40 pouces) et comprennent respectivement un siège d'avion qui est monté selon un angle α de 30 à 80 degrés, de préférence de 45 à 65 degrés, par rapport à un axe central de cabine d'avion (18).
